(19) Europäisches Patentamt
European Patent Office
Office européen des brevets

(11) EP 0 730 315 B1

(12) FASCICULE DE BREVET EUROPEEN

(45) Date de publication et mention de la délivrance du brevet: **07.06.2000 Bulletin 2000/23**

(51) Int Cl.[7]: **H01M 4/52**, H01M 4/32, H01M 4/76

(21) Numéro de dépôt: **96400423.8**

(22) Date de dépôt: **28.02.1996**

# (54) Electrode au nickel pour accumulateur alcalin

Nickelelektrode für Alkaliakkumulator

Nickelelectrode for alcaline accumulator

(84) Etats contractants désignés:
**DE ES FR GB IT SE**

(30) Priorité: **03.03.1995 FR 9502504**

(43) Date de publication de la demande:
**04.09.1996 Bulletin 1996/36**

(73) Titulaire: **SAFT**
**F-93230 Romainville (FR)**

(72) Inventeurs:
- **Bernard, Patrick**
  **91300 Massy (FR)**
- **Audry, Claudette**
  **91300 Massy (FR)**
- **Lecerf, André**
  **35740 Pace (FR)**
- **Senyarich, Stephane**
  **77380 Combs la Ville (FR)**

(74) Mandataire: **Laroche, Danièle et al**
**COMPAGNIE FINANCIERE ALCATEL**
**Dépt. Propriété Industrielle,**
**30, avenue Kléber**
**75116 Paris (FR)**

(56) Documents cités:
**EP-A- 0 353 837** **EP-A- 0 390 677**
**DE-A- 4 239 295** **DE-A- 4 429 273**
**US-A- 5 384 216**

- **JOURNAL OF POWER SOURCES, vol. 29, no. 3/4, Février 1990, LAUSANNE, CH, pages 453-466, XP000233860 B. C. CORNILSEN ET AL.: "STRUCTURAL COMPARISON OF NICKEL ELECTRODES AND PRECURSOR PHASES"**
- **PATENT ABSTRACTS OF JAPAN vol. 17, no. 334 (E-1387), 24 Juin 1993 & JP-A-05 041213 (SANYO ELECTRIC CO., LTD.)**
- **PATENT ABSTRACTS OF JAPAN vol. 17, no. 209 (E-1355), 3 Avril 1993 & JP-A-04 349353 (YUASA BATTERY CO., LTD.)**
- **PATENT ABSTRACTS OF JAPAN vol. 17, no. 173 (E-1345), 17 Novembre 1992 & JP-A-04 328257 (TOSHIBA BATTERY CO., LTD.)**
- **PATENT ABSTRACTS OF JAPAN vol. 18, no. 77 (E-1504), 5 Novembre 1993 & JP-A-05 290841 (HITACHI MAXELL LTD.)**
- **PATENT ABSTRACTS OF JAPAN vol. 15, no. 9 (E-1021), 9 Janvier 1991 & JP-A-02 262245 (JAPAN STORAGE BATTERY CO., LTD.)**
- **PATENT ABSTRACTS OF JAPAN vol. 12, no. 106 (E-596) [2953] , 6 Avril 1988 & JP-A-62 234867 (YUASA BATTERY CO., LTD.)**
- **DATABASE WPI Derwent Publications Ltd., London, GB; AN 90-054055 XP002000442 & JP-A-02 006 340 (KANSAI SHOKUBAI KAG)**
- **DATABASE WPI Derwent Publications Ltd., London, GB; AN 86-033241 XP002000443 & JP-A-60 255 632 (SUMITOMO METAL MINI KK)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 730 315 B1

## Description

La présente invention concerne une électrode au nickel à support non fritté pour accumulateur à électrolyte alcalin par exemple du type nickel-cadmium Ni-Cd ou nickel-hydrure métallique Ni-MH, et plus particulièrement la matière active destinée au fonctionnement d'une telle électrode.

Jusqu'à une époque récente, tous les accumulateurs à électrolyte alcalin comportaient une électrode au nickel à support fritté dans les pores duquel la matière active était déposée électrochimiquement, ou chimiquement par plusieurs opérations successives de précipitation. Ce procédé de fabrication est toutefois long et coûteux. Pour répondre au besoin croissant des utilisateurs, ces électrodes peuvent aujourd'hui être réalisées de manière différente. Une électrode au nickel à support non fritté se compose d'une structure conductrice tridimensionnelle poreuse, comme par exemple un feutre ou une mousse métallique ou en matériau carboné, dans laquelle est introduite une pâte contenant la matière active. La pâte comprend habituellement, associés à un liant, un hydroxyde à base de nickel et une poudre conductrice composée par exemple de composés du cobalt tels que le cobalt métallique, un hydroxyde de cobalt et/ou un oxyde de cobalt.

Par précipitation chimique, on obtient un hydroxyde de nickel du type $\beta$-$Ni(OH)_2$ monophasé qui cristallise dans le réseau hexagonal avec les paramètres de maille suivants: a = 0,31nm et c = 0,46nm. Il est constitué d'un empilement de feuillets de $Ni(OH)_2$. Les cristallites d'hydroxyde de nickel se présentent généralement sous la forme de plaquettes hexagonales. L'hydroxyde de nickel peut contenir une proportion mineure d'hydroxyde d'un ou plusieurs autres métaux syncristallisés qui ne modifie pas la structure cristalline de l'hydroxyde.

Dans le cas de l'électrode positive à base d'hydroxyde de nickel, les modifications structurales intervenant lors du cyclage électrochimique ont été explicitées par BODE et al. (Electrochemica Acta, 11 (1966) 1079) sous la forme d'un diagramme mettant en jeu les phases $\alpha^{II}$, $\beta^{II}$, $\beta^{III}$ et $\gamma^{III}$ dont la structure est bien connue des cristallographes:

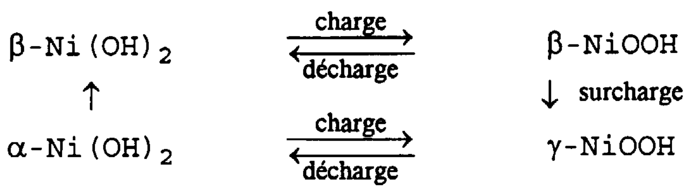


Si la réaction mise en jeu lors d'un cyclage dans des conditions modérées d'utilisation consiste en une transformation de l'hydroxyde $\beta$-$Ni(OH)_2$ majoritairement en oxyhydroxyde $\beta$-NiOOH par simple déprotonation, d'autres modifications structurales peuvent apparaître. Ainsi il est bien connu de l'homme de l'art que la transformation de l'oxyhydroxyde $\beta$-NiOOH en oxyhydroxyde $\gamma$-NiOOH se produit de manière intense et naturelle en cas de charge à courant élevé, en surcharge et/ou au cours d'un stockage prolongé à l'état chargé. Cette transformation est d'autant plus importante que la concentration de l'électrolyte est élevée. La raison en est que la phase $\gamma$-NiOOH est thermodynamiquement plus stable que la phase $\beta$-NiOOH. Cependant bien que la phase $\gamma$-NiOOH apparaisse comme attractive au plan de la capacité massique puisqu'elle contient une partie du nickel à un degré d'oxydation +4 (J. LABAT: Thèse, Université de Bordeaux, 1965), cette phase présente l'inconvénient majeur d'engendrer un fort gonflement de l'électrode pouvant conduire à sa destruction. En effet la distance interfeuillet de la phase $\gamma$-NiOOH est environ deux fois plus élevée que celle de la phase $\beta$-NiOOH. C'est la raison pour laquelle de nombreux travaux ont été entrepris pour inhiber sa formation. Ainsi il est bien connu de l'homme de l'art que l'ajout de cadmium, de zinc et/ou de magnésium syncristallisé dans l'hydroxyde $Ni(OH)_2$ présente une certaine efficacité.

La phase $\alpha$-$Ni(OH)_2$ peut être obtenue par dépôt cathodique ou tout autre procédé. La phase $\alpha$-$Ni(OH)_2$ a l'intérêt de posséder une conductivité bien plus élevée que la phase $\beta$-$Ni(OH)_2$. Cependant l'hydroxyde $\alpha$-$Ni(OH)_2$ se transforme spontanément en hydroxyde $\beta$-$Ni(OH)_2$ dans le milieu aqueux alcalin.

L'hydroxyde de nickel est habituellement caractérisé par des paramètres comme sa composition chimique (présence ou non d'autres métaux, proportion), sa granulométrie, la forme de ses grains (sphériques ou irréguliers), sa surface mesurée par la méthode de B.E.T., ou bien encore son point de déshydratation. A ce jour, l'unique méthode connue de contrôle de la capacité de la matière active est une évaluation en accumulateur, mais la réalisation d'accumulateurs est une opération longue et coûteuse. Le problème se pose donc de disposer d'un paramètre capable de s'assurer de manière fiable et reproductible que la matière active possède une capacité élevée. Or un hydroxyde de nickel possédant les mêmes valeurs de ces paramètres qu'un autre hydroxyde peut présenter par rapport à ce dernier une différence de capacité électrochimique qui peut atteindre 40%. Une telle variabilité des performances de la matière active est inacceptable par les fabricants d'accumulateurs.

D'une manière générale il est bien connu que pour les matériaux solides polycristallins, plus le degré de cristallinité augmente, plus la réactivité électrochimique diminue. Ainsi pour la plupart des composés cristallins l'activité

électrochimique est directement reliée au taux de défauts présents dans le solide tels que des lacunes, des dislocations, la présence d'atomes en position interstitielle, etc... Par conséquent la réactivité électrochimique élevée d'un matériau est directement corrélée à l'état cristallin. C'est par microscopie électronique à transmission que A. DELAHAYE-VIDAL et al. (Reactivity of Solids, 2 (1986) 223) a particulièrement mis en évidence que les hydroxydes de nickel de type β bien cristallisés présentaient un faible rendement électrochimique à la différence d'un hydroxyde de faible cristallinité qui possède une bonne réactivité.

C'est la raison pour laquelle de nombreux travaux ont porté sur l'addition d'ions étrangers monovalents, divalents, trivalents et même quadrivalent à l'hydroxyde de nickel de manière à en modifier la structure cristalline et obtenir ainsi de meilleures performances. Par exemple E.J. CASEY (Journal of the Electrochemical Society, 112 (1965) 371) relate l'évaluation de 26 ions étrangers différents et J.P. HARIVEL (Thèse, Université de Strasbourg, 1969) a étudié l'effet de $Co^{2+}$, $Mg^{2+}$, $Mn^{2+}$, $Zn^{2+}$, $Pb^{2+}$, $Ba^{2+}$, $Fe^{2+}$, $Al^{3+}$, $Si^{4+}$, $Mn^{4+}$ et $Pb^{4+}$ sur la capacité massique et le potentiel de l'électrode. L'étude est complétée par une description des variations structurales des produits obtenus. Ceux-ci peuvent être amorphes, polycristallins monophasiques et même polycristallins diphasiques. D'autres additifs tels que le césium, le chrome, le cuivre, le fer, le lanthanne, l'argent ou bien encore l'yttrium, sont mentionnés par CORRIGAN et al. (Journal of the Electrochemical Society, 136 (1989) 723) leurs effets tant sur le dégagement de l'oxygène que sur le potentiel d'oxydoréduction de l'hydroxyde de nickel ont été mis en évidence.

Des travaux plus récents s'attachent au calcul de la taille des cristallites de l'hydroxyde de nickel à partir de l'élargissement des raies du diagramme de diffraction des rayons X. La largeur des raies de diffraction des rayons X permet de calculer la distance moyenne de cohérence du cristal, c'est à dire la distance moyenne où la symétrie du réseau cristallin n'est pas rompue, appelée habituellement taille des cristallites. La taille de cristallite mentionnée par les différents auteurs (JP-5 041 213, US-5,384,216, JP-5 290 841) est habituellement calculée à partir de la raie la plus intense du spectre, la raie [101] dans le cas des hydroxydes de nickel. Parfois une raie moins intense comme la raie [001] (JP-4 349 353) est utilisée. Mais la taille de cristallite calculée à partir d'une seule raie devient peu significative lorsque l'hydroxyde de nickel contient une proportion supérieure à 3 % d'un autre métal dont le spectre interfère avec celui du nickel, notamment dans le cas du cobalt.

Le but de la présente invention est de proposer une électrode au nickel à support non fritté contenant une matière active dont la capacité est supérieure aux matières actives habituellement utilisées.

L'invention a encore pour but de proposer une électrode contenant une matière active à base d'hydroxyde de nickel dont la capacité peut être estimée de manière fiable et reproductible avant assemblage en accumulateur.

L'invention a également pour but de proposer un accumulateur à électrolyte alcalin utilisant ladite électrode.

La présente invention a pour objet une électrode au nickel à support non fritté pour accumulateur à électrolyte alcalin comprenant une structure conductrice tridimensionnelle poreuse et une matière électrochimiquement active contenant des particules d'un hydroxyde à base de nickel de structure cristallographique β.

L'invention est caractérisée par le fait que ledit hydroxyde répond au critère suivant : un rapport de la somme des surfaces des pics à $3687 \pm 10 cm^{-1}$ et $3600 \pm 10 cm^{-1}$ à la surface du pic à $3580 \pm 10 cm^{-1}$ du spectre de spectroscopie RAMAN dudit hydroxyde qui vaut 0,11±0,03.

Le spectre obtenu par spectroscopie RAMAN est réalisé dans les conditions suivantes:

| | |
|---|---|
| raie excitative (argon) | 514,32nm |
| puissance laser en sortie | 50mW |
| temps d'acquisition | 7mn |
| surface analysée | 1 $\mu m^2$ |

La méthode de spectroscopie reposant sur l'effet RAMAN permet d'accéder à la structure moléculaire du matériau. Cette méthode met en évidence les mouvements de vibration (élongation ou rotation) des liaisons interatomiques du cristal.

Un hydroxyde de nickel très bien cristallisé du type $\beta$-$Ni(OH)_2$ obtenu par la méthode de MERLIN et al. (C. R. Acad. Sci., 236 (1953) 1892) présente trois pics qui correspondent à un mode d'élongation symétrique de la liaison O-H (environ $3580 cm^{-1}$) et à deux modes de vibration de la liaison Ni-OH (environ $460 cm^{-1}$ et $315 cm^{-1}$). Suivant les conditions opératoires, on peut assister à un déplacement de l'ensemble du spectre d'environ plus ou moins $10 cm^{-1}$ de part et d'autre de ces valeurs moyennes. La méthode de MERLIN et al. consiste à maintenir à 90°C un mélange de 5ml de $NiSO_4$ 0,1M et de 25ml de $NH_4OH$ 2M jusqu'à sa décoloration complète, puis à recueillir le précipité d'hydroxyde de nickel qui s'est formé.

Les hydroxydes de nickel selon la présente invention sont des hydroxydes de type $\beta$-$Ni(OH)_2$ désordonné dont le spectre de spectroscopie RAMAN a été décrit par CORNILSEN et al. (Jnl. Power Sources, 29, 3/4 (1990) 453-466). Ils présentent deux pics supplémentaires dans le domaine des liaisons O-H autour de $3687 cm^{-1}$ et de $3600 cm^{-1}$, La présence de ces pics supplémentaires apparaissant à des nombres d'onde plus élevés que celui du pic

principal à $3580cm^{-1}$, signifient que les groupements hydroxyls subissent moins de contraintes de la part de leur environnement que ceux représentés par le pic principal. Dans le cas du pic situé vers $3687cm^{-1}$, les groupements hydroxyls qu'il représente peuvent être considérés comme situés à la surface des cristallites. Lorsque la réactivité des hydroxydes de nickel augmente, la taille des cristallites mesurée par diffraction des rayons X diminue et le rapport de leur surface à leur volume augmente. Par conséquent le nombre de groupements hydroxyls en surface augmente, ainsi que la surface du pic supplémentaire situé vers $3687cm^{-1}$ du spectre RAMAN. En ce qui concerne le pic situé vers $3600cm^{-1}$, les groupements hydroxyls qu'il représente peuvent être considérés comme situés au voisinage de défauts de la structure cristalline. Lorsque la réactivité des hydroxydes de nickel augmente, le nombre de groupements hydroxyls situés au voisinage de défauts de la structure cristalline augmente, ainsi que la surface du pic supplémentaire situé vers $3600cm^{-1}$ du spectre RAMAN. Selon l'invention, le rapport de la somme des surfaces des pics vers $3687cm^{-1}$ et $3600cm^{-1}$ à la surface du pic vers $3580cm^{-1}$ doit être compris entre 0,08 et 0,14.

Préférablement l'hydroxyde répond en outre à au moins un autre critère. Ces critères ont tous pour fonction de quantifier le taux de défauts présents dans le cristal qui sont susceptibles de constituer des sites propices à une utilisation électrochimique.

Un deuxième critère est que ledit hydroxyde présente un rapport de la surface du pic à $511\pm10cm^{-1}$ à la surface du pic à $460\pm10cm^{-1}$ du spectre de spectroscopie RAMAN dudit hydroxyde qui est de $1,1\pm0,1$.

Par rapport à l'hydroxyde $\beta$-$Ni(OH)_2$ ordonné, les hydroxydes de nickel de l'invention présentent en outre un pic à environ $511cm^{-1}$ qui est attribué à la liaison Ni-O où l'oxygène ne porte plus de proton. La présence du pic à $511cm^{-1}$ peut donc être corrélée à la quantité de lacunes en proton dans l'hydroxyde. La quantité de lacunes en proton dans le matériau est reliée au coefficient de diffusion du proton dans le solide cristallin, c'est à dire à la réactivité de l'hydroxyde de nickel. Selon l'invention, le rapport de la surface de ce pic à celle du pic à $460cm^{-1}$ apparaissant sur le spectre RAMAN de $Ni(OH)_2$ doit être compris entre 1,0 et 1,2.

Un troisième critère est que ledit hydroxyde présente une longueur de cohérence L qui est de $13\pm3$nm, ladite longueur de cohérence L répondant à la formule:

$$L = \sqrt[3]{(\phi_{[100]})^2 x (\phi_{[001]})}$$

dans laquelle $\phi_{[100]}$ est la taille des cristallites calculée à partir de la largeur à mi-hauteur de la raie [100] et $\phi_{[001]}$ est la taille des cristallites calculée à partir de la largeur à mi-hauteur de la raie [001] du diagramme de diffraction des rayons X dudit hydroxyde.

Le critère de longueur de cohérence selon l'invention est représentatif du degré de cristallinité et de la proportion de défauts dans l'hydroxyde. Il est admis que l'activité électrochimique est liée au nombre élevé de sites réactifs constitués par les défauts de la matière active, donc dans le cas présent à une longueur de cohérence de faible valeur. Selon l'invention, la longueur de cohérence doit être comprise entre 10nm et 16nm.

Ce troisième critère présente l'avantage de reposer sur deux raies de forte intensité permettant une grande précision. De plus ces deux raies apparaissent les premières au cours de la réalisation du diagramme de diffraction des rayons X, ce qui permet de limiter le balayage angulaire et ainsi d'accélérer les mesures.

Le diagramme de diffraction X est réalisé dans les conditions suivantes:

| | |
|---|---|
| tension du tube | 40KV |
| courant de tube | 30mA |
| vitesse de balayage | 0,9 degré/mn |
| raie K$\alpha$ du cuivre | 0,154nm |

Les raies observées sur le diagramme de diffraction des rayons X sont provoquées par la structure cristalline de l'hydroxyde $\beta$-$Ni(OH)_2$. Les intensités diffractées sont liées à la symétrie du réseau et à la position des atomes de Ni dans la maille. A chaque famille de plan réticulaire [hkl] est rattaché un nombre proportionnel à l'amplitude du faisceau diffracté, appelé facteur de structure et noté $F_{[hkl]}$, tel que:

$$F_{[hkl]} = \sum_{r=1}^{p} f_r \, e^{2\pi i(hxr+kyr+lzr)}$$

avec

r: indice de l'atome de Ni,
p: nombre d'atomes de Ni d'une cristallite,
$f_r$: facteur de diffusion de l'atome $Ni_r$,
i: nombre complexe défini par $i^2=-1$,
h, k, l: indices du plan de diffraction,
$x_r$, $y_r$, $z_r$: coordonnées de l'atome $Ni_r$ par rapport respectivement aux axes de la maille a, b, et c.

On comprend que dans ces conditions la diminution de l'intensité d'une raie diffractée est liée à la densité de défauts présents dans le cristal.

Un quatrième critère est que le rapport de l'intensité de la raie [103] à la raie [200] du diagramme de diffraction des rayons X dudit hydroxyde vaut 1,05±0,10.

Dans le cas présent, l'intensité de la raie [103] est corrélée à l'augmentation du taux de défauts, l'intensité de la raie [200] étant sensiblement constante. Selon l'invention le rapport de leur intensité doit être compris entre 0,95 et 1,15.

De préférence, ledit hydroxyde répond en outre à au moins un des critères précités. Mais l'hydroxyde peut tout aussi bien répondre simultanément aux trois critères énoncés précédemment. Dans la majorité des cas le fait que l'hydroxyde réponde à l'un de ces critères entraîne automatiquement le fait qu'il remplisse aussi les deux autres critères.

La présente invention concerne une électrode dont la matière active est un hydroxyde à base de nickel de structure cristallographique β obtenu par tout procédé de synthèse, y compris tout autre procédé que celui décrit dans la présente demande. En particulier les grains de l'hydroxyde pulvérulent obtenu peuvent prendre toutes les formes qui vont d'une forme plus ou moins sphérique à une forme complètement irrégulière.

De préférence, ledit hydroxyde à base de nickel contient au moins un hydroxyde syncristallisé d'un métal choisi parmi le cobalt, le cadmium, le zinc, le calcium et le magnésium. Il est bien entendu que le terme hydroxyde utilisé dans la présente demande signifie aussi bien un hydroxyde de nickel qu'un hydroxyde contenant principalement du nickel mais également au moins l'un de ces métaux. Habituellement on ajoute moins de 10,5% d'hydroxyde de cadmium dans la matière active afin d'améliorer sa chargeabilité et de diminuer le gonflement de l'électrode. Ce gonflement peut être également réduit par l'ajout d'une quantité inférieure à 8% d'hydroxyde de zinc. Dans le cas de la présence d'hydroxydes de cobalt et de cadmium, la quantité totale de ces hydroxydes reste inférieure à 16,5%; et dans le cas où on leur ajoute un hydroxyde de zinc, la quantité totale des trois hydroxydes ne dépasse pas 12,5%. Dans le cas de la présence d'hydroxydes de cobalt et de zinc, la quantité totale de ces hydroxydes reste en dessous de 14%.

L'hydroxyde de cobalt, généralement présent dans une proportion au plus égale à 10% en poids dudit hydroxyde, a pour rôle d'améliorer la conductivité et la chargeabilité de l'électrode en abaissant le potentiel d'oxydo-réduction de l'hydroxyde de nickel (V.Z. BARZUKOV et al., Soviet Electrochem., 21 (1985) 14; M.E. FOLQUER, J. Electroanal. Chem., 172 (1984) 235). Dans un hydroxyde contenant de l'hydroxyde de nickel et de l'hydroxyde de cobalt syncristallisé, les atomes de cobalt possédant une taille très proche de celle des atomes de nickel occupent des sites où sont normalement placés des atomes de nickel dans un hydroxyde composé exclusivement de nickel. Par conséquent la structure cristallographique de l'hydroxyde de nickel n'est pas modifiée par l'ajout d'hydroxyde de cobalt. Pour que l'addition de cobalt soit pleinement efficace, il faut que les atomes de cobalt soient répartis de manière homogène dans l'hydroxyde de nickel. En effet au cours de la formation de l'hydroxyde, les atomes de cobalt sont syncristallisés au degré d'oxydation +III créant ainsi des lacunes protoniques dans le cristal. Une répartition homogène des atomes de cobalt doit améliorer le coefficient de diffusion du proton, et par conséquent les performances de la matière active en régime rapide. Ainsi on obtient une meilleure chargeabilité à chaud et on diminue l'autodécharge de l'hydroxyde par déplacement du potentiel d'oxydo-réduction. Si l'hydroxyde de cobalt est introduit dans l'édifice cristallin de l'hydroxyde de nickel de manière inhomogène, les atomes de cobalt sont regroupés sous forme d'amas et les lacunes protoniques en résultant ne correspondent plus à la quantité d'atomes insérés. Pour observer la répartition du cobalt, les méthodes connues sont innefficaces pour des taux faibles en dopant. Notamment la diffraction des rayons X ne détecte la présence d'une seconde phase due à la répartition inhomogène du cobalt qu'à partir d'une proportion d'environ 5%.

Selon un mode de réalisation particulier de la présente invention, ledit hydroxyde étant composé majoritairement d'un hydroxyde de nickel et contenant au moins une proportion massique P d'un hydroxyde de cobalt syncristallisé en % dudit hydroxyde, ledit hydroxyde répond en outre au critère suivant:

- un rapport Q de l'intensité du pic à $511\pm10cm^{-1}$ à l'intensité du pic à $460\pm10cm^{-1}$ du spectre de spectroscopie RAMAN dudit hydroxyde qui est tel que:

$$Q = xP + y \qquad \text{où } x = 0,24 \pm 0,02 \text{ et } y \geq 0,7.$$

Le rapport Q de l'intensité du pic à 511±10cm$^{-1}$ à l'intensité du pic à 460±10cm$^{-1}$ du spectre de spectroscopie RAMAN est un nombre sans dimension. La proportion P de cobalt est le rapport du poids d'hydroxyde de cobalt au poids de l'hydroxyde total à base de nickel exprimé en % et est également sans dimension. L'application de ce critère permet de s'assurer de la répartition homogène du cobalt dans la structure cristalline de l'hydroxyde de nickel.
Un procédé de fabrication de l'hydroxyde à base de nickel contenu dans ladite électrode comprend les étapes suivantes:

- réalisation d'une solution aqueuse comprenant un sel de nickel, comme un chlorure, un sulfate ou un nitrate, ladite solution étant maintenue à une température constante comprise entre 20 et 80°C,
- précipitation dudit hydroxyde par ajout continu dans ladite solution d'une solution aqueuse concentrée d'une base forte pendant une durée comprise entre 15 minutes et une heure,
- mûrissement dudit hydroxyde dans ladite solution, maintenue à une température constante, pendant une durée comprise entre une et dix heures,
- séparation dudit hydroxyde de ladite solution par filtration, séchage à une température comprise entre 70°C et 120°C, puis lavage à l'eau et séchage.

L'hydroxyde obtenu est ensuite broyé et tamisé pour recueillir la fraction granulométrique adéquate à la réalisation de l'électrode de l'invention.
De préférence, ladite solution contient en outre un sel d'au moins un métal choisi parmi le cobalt, le cadmium, le zinc, le calcium et le magnésium.
D'autres caractéristiques et avantages de la présente invention apparaîtront au cours des exemples suivants de réalisation, donnés bien entendu à titre illustratif mais nullement limitatif, et dans le dessin annexé sur lequel:

- la figure 1 montre une courbe de cyclage d'un accumulateur nickel-cadmium contenant une électrode selon la présente invention, la capacité massique déchargée R en mAh/g de matière active positive est donnée en ordonnée et en abscisse le nombre de cycles N,
- la figure 2 représente le diagramme de diffraction des rayons X de l'hydroxyde contenu dans les électrodes selon l'invention comparativement à l'hydroxyde contenu dans les électrodes ne faisant pas partie de l'invention, l'intensité relative I des raies est donnée en ordonnée et en abscisse l'angle 2Θ en degrés,
- la figure 3, analogue à la figure 2, montre en vue agrandie le domaine des raies [103] et [200],
- la figure 4 montre le domaine de nombre d'onde élevé du spectre de spectroscopie RAMAN de l'hydroxyde contenu dans les électrodes selon l'invention comparativement à l'hydroxyde contenu dans les électrodes ne faisant pas partie de l'invention, l'intensité relative J des pics est donnée en ordonnée et en abscisse le nombre d'onde K en cm$^{-1}$,
- la figure 5, analogue à la figure 4, montre le domaine de faible nombre d'onde,
- la figure 6 représente la relation entre le rapport de l'intensité de la raie [103] à la raie [200] du diagramme de diffraction des rayons X de l'hydroxyde contenu dans les électrodes et sa capacité, la valeur du rapport M de l'intensité relative des raies est donnée en ordonnée et en abscisse la capacité R en mAh/g,
- la figure 7 représente la relation entre la longueur de cohérence de l'hydroxyde contenu dans les électrodes et sa capacité, la longueur de cohérence L des pics en nanomètres est donnée en ordonnée et en abscisse la capacité R en mAh/g,
- la figure 8 représente la relation entre le rapport de la somme des surfaces des pics à 3687cm$^{-1}$ et 3600cm$^{-1}$ à la surface du pic à 3580cm$^{-1}$ du spectre de spectroscopie RAMAN de l'hydroxyde contenu dans les électrodes et sa capacité, la valeur du rapport S1 de la surface des pics est donnée en ordonnée et en abscisse la capacité R en mAh/g,
- la figure 9 représente la relation entre le rapport de la surface du pic à 511cm$^{-1}$ à la surface du pic à 460cm$^{-1}$ du spectre RAMAN de l'hydroxyde contenu dans les électrodes et sa capacité, la valeur du rapport S2 de la surface des pics est donnée en ordonnée et en abscisse la capacité R en mAh/g,

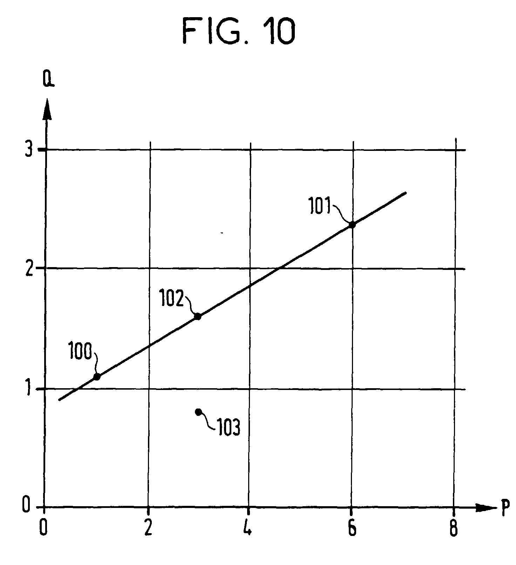

- la figure 10 représente la relation entre le rapport de l'intensité du pic à 511cm$^{-1}$ à l'intensité du pic à 460cm$^{-1}$ du spectre RAMAN de l'hydroxyde contenu dans les électrodes et la proportion massique d'hydroxyde de cobalt syncristallisé, la valeur du rapport Q de l'intensité des pics est donnée en ordonnée et en abscisse la proportion massique en %.

EXEMPLE 1

On prépare un échantillon a d'hydroxyde à base de nickel selon la présente invention contenant en poids 1% d'hydroxyde de cobalt et 7% d'hydroxyde de cadmium syncristallisés.
Le réacteur de précipitation est muni d'une double enveloppe pour permettre la régulation homogène de la

température et d'un dispositif d'agitation, comportant un mobile et des contre-pales, autorisant le contrôle des conditions hydrodynamiques de la synthèse.

Dans le réacteur maintenu à une température constante de 36°C, on introduit 3,51 d'une solution aqueuse à une concentration de 1M de nitrates de nickel, de cobalt et de cadmium dans les proportions requises pour obtenir l'hydroxyde voulu. On y ajoute 1962g d'une solution de soude caustique à une concentration de 4M selon un débit constant et continu pendant 30 minutes. Lorsque l'ajout de la soude est terminé, la solution est maintenue sous agitation et chauffage constants pendant 3 heures afin de réaliser un mûrissement des particules d'hydroxyde. Le précipité est alors filtré sur un buchner, séché pendant 48 heures à l'étuve à une température de 90°C, puis lavé à l'eau désionisée. Le précipité est ensuite broyé et tamisé à la fraction granulométrique adéquate.

On procède alors à la caractérisation de l'échantillon a obtenu. A partir du diagramme de diffraction X de l'échantillon a, on mesure l'intensité relative de la raie [103] et de la raie [200] et on en calcule le rapport. Afin d'obtenir une précision supérieure de la mesure, on effectue une déconvolution des raies [103] et [200] en utilisant des courbes de référence dites "Pseudo-Voigt" et en procédant à un alignement des courbes expérimentales.

Le rapport de l'intensité de la raie [103] à la raie [200] pour l'échantillon a vaut 0,95. La longueur de cohérence est de 10,5nm. La taille des cristallites calculée à partir de la largeur à mi-hauteur de la raie [101] la plus intense est ici de 2,5nm.

Dans le cas de l'échantillon a selon la présente invention, les quatre critères sont simultanément remplis.

A partir du spectre de l'échantillon a obtenu par spectroscopie RAMAN , on mesure la surface des pics situés aux longueurs d'ondes 3687cm$^{-1}$, 3600cm$^{-1}$, 3580cm$^{-1}$, 511cm$^{-1}$ et 460cm$^{-1}$. On calcule alors le rapport de la somme des surfaces des pics à 3687cm$^{-1}$ et 3600cm$^{-1}$ à la surface du pic à 3580cm$^{-1}$, et on obtient pour l'échantillon a la valeur de 0,137. Le calcul du rapport de la surface du pic à 511cm$^{-1}$ à la surface du pic à 460cm$^{-1}$ donne une valeur de 1,17.

Une électrode selon l'invention est fabriquée en mélangeant 41% en poids de matière active composée de l'échantillon a, 5% d'un hydroxyde de cobalt, et 54% d'un gel composé d'un liant cellulosique dans un solvant aqueux. La pâte ainsi obtenue est introduite dans une mousse de nickel de porosité environ 95%. L'ensemble est séché puis laminé pour obtenir l'électrode.

Un accumulateur de type nickel-cadmium est assemblé qui contient l'électrode précédemment réalisée, entourée de deux électrodes de cadmium de type fritté connu. Les électrodes sont séparées par deux couches de polyamide non tissé et une couche d'une membrane cellulosique imperméable à l'oxygène. Le faisceau est imprégné d'un électrolyte alcalin, une solution aqueuse de potasse KOH 9,1N et de lithine LiOH 0,2M.

Après un repos de 48 heures, l'accumulateur, de capacité nominale $C_n$ est cyclé dans les conditions suivantes:

| | |
|---|---|
| cycle 1: | charge à 0,1$C_n$ pendant 10 heures, |
| | décharge à 0,2$C_n$ jusqu'à une tension d'arrêt de 1V; |
| cycles suivants: | charge à 0,2$C_n$ pendant 7,5h, |
| | décharge à 0,2$C_n$ jusqu'à 1 Volt. |

Après stabilisation, on mesure la capacité déchargée qui est de 292mAh/g de matière active positive pour l'échantillon a, ce qui correspond à l'échange de 1,25 électron par mole de $Ni(OH)_2$. On rappelle que la matière active positive est constituée de l'hydroxyde de nickel, contenant éventuellement des hydroxydes syncristallisés, et du matériau conducteur qui peut lui être ajouté. La courbe 50 de la figure 1 montre que l'évolution de la capacité déchargée ne varie pas durant un cyclage atteignant 100 cycles.

Les résultats sont rassemblés dans le tableau I ci-dessous.

EXEMPLE 2

On prépare un échantillon b d'hydroxyde à base de nickel selon la présente invention contenant 1% d'hydroxyde de cobalt et 7% d'hydroxyde de cadmium syncristallisés, par un procédé de précipitation analogue à celui décrit dans l'exemple 1 mais à une température de précipitation de 50°C. Puis on procède à la caractérisation de l'échantillon b obtenu.

Le diagramme de diffraction X de l'échantillon b est représenté par la courbe 1B sur la figure 2 et en vue agrandie sur la figure 3; il est réalisé dans les mêmes conditions que celles données dans l'exemple 1. A partir de ce diagramme, on mesure l'intensité relative de la raie 10 [103] et de la raie 11 [200] et on en calcule le rapport.

Le rapport de l'intensité de la raie 10 [103] à la raie 11 [200] pour l'échantillon b vaut 0,95. La longueur de cohérence est de 14,1nm. La taille des cristallites calculée à partir de la largeur à mi-hauteur de la raie 12 [101] la plus intense est ici de 6,3nm.

Le spectre obtenu par spectroscopie RAMAN pour l'échantillon b est montré par la courbe 2B représentée sur la figure 4 pour les nombres d'onde élevés et sur la figure 5 pour les faibles nombres d'onde; il est réalisé dans

les mêmes conditions que celles données dans l'exemple 1. A partir de ce spectre, on mesure la surface des pics 20, 21, 22, 23, et 24 situés respectivement aux longueur d'ondes $3687cm^{-1}$, $3600cm^{-1}$, $3580cm^{-1}$, $511cm^{-1}$ et $460cm^{-1}$. On calcule alors le rapport de la somme des surfaces des pics 20 et 21 à $3687cm^{-1}$ et $3600cm^{-1}$ à la surface du pic 22 à $3580cm^{-1}$, et on obtient pour l'échantillon b la valeur de 0,116. Le calcul du rapport de la surface du pic 23 à $511cm^{-1}$ à la surface du pic 24 à $460cm^{-1}$ donne une valeur de 1,13.

Dans le cas de l'échantillon b selon la présente invention, les quatre critères sont simultanément remplis.

Un accumulateur Ni-Cd, analogue à celui décrit dans l'exemple 1 mais comportant une électrode contenant l'échantillon b, a été cyclé dans les mêmes conditions que celles données dans l'exemple 1. Après stabilisation, on mesure la capacité déchargée qui est de 273mAh/g de matière active pour l'échantillon b, ce qui correspond à l'échange de 1,16 électron par mole de $Ni(OH)_2$. La courbe 51 de la figure 1 montre que l'évolution de la capacité déchargée ne varie pas durant un cyclage atteignant 100 cycles.

Les résultats sont rassemblés dans le tableau I ci-dessous.

EXEMPLE 3

On prépare un échantillon c d'hydroxyde à base de nickel selon la présente invention contenant 1% d'hydroxyde de cobalt et 7% d'hydroxyde de cadmium syncristallisés, par un procédé de précipitation analogue à celui décrit dans l'exemple 2 mais le séchage est effectué à une température de 105°C. On procède à la caractérisation de l'échantillon c obtenu.

Le diagramme de diffraction X de l'échantillon c est représenté par la courbe 1C sur la figure 2 et en vue agrandie sur la figure 3; il est réalisé dans les mêmes conditions que celles données dans l'exemple 1. A partir de ce diagrammes, on mesure l'intensité relative de la raie [103] et de la raie [200] et on en calcule le rapport.

Le rapport de l'intensité de la raie [103] à la raie [200] pour l'échantillon c vaut 1,00. La longueur de cohérence est de 14,7nm. La taille des cristallites calculée à partir de la largeur à mi-hauteur de la raie [101] la plus intense est ici de 6,8nm.

Le spectre obtenu par spectroscopie RAMAN pour l'échantillon c est montré par la courbe 2C représentée sur la figure 4 pour les nombres d'onde élevés et sur la figure 5 pour les faibles nombres d'onde; il est réalisé dans les mêmes conditions que celles données dans l'exemple 1. A partir de ce spectre, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon c la valeur de 0,110. Le calcul du rapport de la surface du pic à $511cm^{-1}$ à la surface du pic à $460cm^{-1}$ donne une valeur de 1,09.

Dans le cas de l'échantillon c selon la présente invention, les quatre critères sont simultanément remplis.

Un accumulateur Ni-Cd, analogue à celui décrit dans l'exemple 1 mais comportant une électrode contenant l'échantillon c, a été cyclé dans les mêmes conditions que celles données dans l'exemple 1. Après stabilisation, on mesure la capacité déchargée qui est de 270mAh/g de matière active pour l'échantillon c, ce qui correspond à l'échange de 1,15 électron par mole de $Ni(OH)_2$. La courbe 52 de la figure 1 montre que l'évolution de la capacité déchargée ne varie pas durant un cyclage atteignant 100 cycles.

Les résultats sont rassemblés dans le tableau I ci-dessous.

EXEMPLE 4

On prépare un échantillon d d'hydroxyde à base de nickel selon la présente invention contenant 1% d'hydroxyde de cobalt et 7% d'hydroxyde de cadmium syncristallisés, par un procédé de précipitation analogue à celui décrit dans l'exemple 2 mais en utilisant une température de séchage de 115°C. On procède à la caractérisation de l'échantillon d obtenu.

Le diagramme de diffraction X de l'échantillon d est représenté par la courbe 1D sur la figure 2 et en vue agrandie sur la figure 3; il est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon d vaut 1,14. La longueur de cohérence est de 15,9nm. La taille des cristallites calculée à partir de la largeur à mi-hauteur de la raie [101] la plus intense est ici de 7,7nm.

Le spectre obtenu par spectroscopie RAMAN pour l'échantillon d est montré par la courbe 2D représentée sur la figure 4 pour les nombres d'onde élevés et sur la figure 5 pour les faibles nombres d'onde; il est réalisé dans les mêmes conditions que celles données dans l'exemple 1. A partir de ce spectre, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon d la valeur de 0,084. Le calcul du rapport de la surface du pic à $511cm^{-1}$ à la surface du pic à $460cm^{-1}$ donne une

valeur de 1,02.

Dans le cas de l'échantillon d selon la présente invention, les quatre critères sont simultanément remplis.

Un accumulateur Ni-Cd, analogue à celui décrit dans l'exemple 1 mais comportant une électrode contenant l'échantillon d de matière active, a été cyclé dans les mêmes conditions que celles données dans l'exemple 1. Après stabilisation, on mesure la capacité déchargée qui est de 251mAh/g de matière active pour l'échantillon d, ce qui correspond à l'échange de 1,07 électron par mole de $Ni(OH)_2$. La courbe 53 de la figure 1 montre que l'évolution de la capacité déchargée ne varie pas durant un cyclage atteignant 100 cycles.

Les résultats sont rassemblés dans le tableau I ci-dessous.

EXEMPLE 5 A 8

On prépare des échantillons e, f, g et h d'hydroxyde de nickel ne faisant pas partie de l'invention contenant 1% d'hydroxyde de cobalt et 7% d'hydroxyde de cadmium, par un procédé de précipitation analogue à celui décrit dans l'exemple 2 mais en utilisant une température de précipitation supérieure à 80°C et/ou une température de séchage supérieure à 120°C. On procède à la caractérisation des échantillons e à h obtenus.

Les diagrammes de diffraction X des échantillons f, g et h sont représentés par les courbes 1F, 1G et 1H de la figure 2 et en vue agrandie sur la figure 3; ils sont réalisés dans les mêmes conditions que celles données dans l'exemple 1. A partir des diagrammes des échantillons e à h, on mesure l'intensité relative de la raie [103] et de la raie [200] et on en calcule le rapport. On calcule également la longueur de cohérence à partir de la largeur à mi-hauteur des raies [100] et [001] , ainsi que la taille des cristallites à partir de la largeur à mi-hauteur de la raie [101] la plus intense.

Le rapport de l'intensité de la raie [103] à la raie [200] pour les échantillons e, f, g et h vaut respectivement 1,28, 1,33, 1,71, et 2,69. Le premier critère selon l'invention n'est donc pas rempli.

La longueur de cohérence des échantillons e, f, g et h est respectivement de 16,4nm, 16,7nm, 18,5nm et 20,8nm. Le deuxième critère selon l'invention n'est donc pas rempli.

La taille des cristallites des échantillons e, f, g et h, calculée à partir de la largeur à mi-hauteur de la raie [101] la plus intense, est ici respectivement de 9,5nm, 10,4nm, 12,8nm et 13,7nm.

Les spectres obtenus par spectroscopie RAMAN pour les échantillons f, g et h sont montrés par les courbes 2F, 2G et 2H représentée sur la figure 4 pour les nombres d'onde élevés et sur la figure 5 pour les faibles nombres d'onde; ils sont réalisés dans les mêmes conditions que celles données dans l'exemple 1. A partir de ces spectres, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$ pour les échantillons f à h, ainsi que le rapport de la surface du pic à $511cm^{-1}$ à la surface du pic à $460cm^{-1}$.

On calcule alors le rapport de la somme des surfaces des pics à $3687cm^{-1}$ et $3600cm^{-1}$ à la surface du pic à $3580cm^{-1}$, et on obtient respectivement pour les échantillons f, g et h la valeur de 0,062, 0,038 et 0,0076. Le troisième critère selon l'invention n'est donc pas rempli.

Le calcul du rapport de la surface du pic à $511cm^{-1}$ à la surface du pic à $460cm^{-1}$ pour les échantillons f, g et h donne respectivement une valeur de 0,96, 0,93 et 0,63. Le quatrième critère selon l'invention n'est donc pas rempli.

Des accumulateurs Ni-Cd, analogues à celui décrit dans l'exemple 1 mais comportant des électrodes contenant les échantillons e, f, g et h, ont été cyclés dans les mêmes conditions que celles données dans l'exemple 1. Après stabilisation, on mesure la capacité déchargée pour les échantillons e à h.

Tous les résultats pour ces échantillons sont rassemblés dans le tableau I ci-dessous.

TABLEAU I

| REFERENCE | a | b | c | d | e | f | g | h |
|---|---|---|---|---|---|---|---|---|
| $M=\frac{I_{[103]}}{I_{[200]}}$ | 0,95 | 0,98 | 1,00 | 1,14 | 1,28 | 1,33 | 1,71 | 2,69 |
| $L= 3\sqrt{(\phi_{[100]})^2.\phi_{[001]}}$ (nm) | 10,5 | 14,1 | 14,7 | 15,9 | 16,4 | 16,7 | 18,5 | 20,8 |
| Taille de cristallite (nm) selon la raie [101] | 2,5 | 6,3 | 6,8 | 7,7 | 9,5 | 10,4 | 12,8 | 13,7 |
| $S_1 = \frac{S_{3600} + S_{3687}}{S_{3580}}$ | 0,137 | 0,116 | 0,11 | 0,084 | - | 0,062 | 0,038 | 0,0076 |
| $S_2 = \frac{S_{511}}{S_{460}}$ | 1,17 | 1,13 | 1,09 | 1,02 | - | 0,96 | 0,93 | 0,63 |

TABLEAU I (suite)

| REFERENCE | a | b | c | d | e | f | g | h |
|---|---|---|---|---|---|---|---|---|
| Nombre d'électrons échangés par mole de $Ni(OH)_2$ | 1,25 | 1,16 | 1,15 | 1,07 | 0,98 | 0,94 | 0,89 | 0,77 |
| Capacité (mAh/g) de la matière active positive | 292 | 273 | 270 | 251 | 230 | 221 | 207 | 180 |

Le rendement théorique de l'hydroxyde de nickel est de 289mAh/g, basé sur l'échange d'un électron par mole de $Ni(OH)_2$ selon la réaction électrochimique:

$$Ni(OH)_2 + OH^- \underset{\text{décharge}}{\overset{\text{charge}}{\rightleftarrows}} NiOOH + H_2O + e^-$$

En pratique on constate que les capacités observées sur l'hydroxyde de nickel peuvent être supérieures à cette valeur. Les fabricants d'accumulateurs s'intéressent en priorité aux matières actives dont la capacité massique déchargée de l'hydroxyde de nickel est supérieure ou égale à cette valeur théorique, ce qui correspond à l'échange de plus d'un électron par mole d'hydroxyde de nickel.

Sur la figure 6 est représentée la relation entre le rapport M de l'intensité de la raie [103] à la raie [200] du diagramme de diffraction des rayons X et la capacité massique R de la matière active correspondant aux échantillons a à h préparés précédemment. Lorsque l'hydroxyde possède des valeurs de ce rapport comprises entre 0,95 et 1,15, on observe que les matières actives remplissent la condition précitée.

La longueur de cohérence L est représentée sur la figure 7 en relation avec la capacité massique R de la matière active correspondant aux échantillons a à h préparés précédemment. Lorsque l'hydroxyde possède des valeurs de cette longueur comprises entre 10nm et 16nm, on observe que les performances souhaitées de la matière active sont obtenues.

On a représenté sur la figure 8 la relation entre le rapport de la somme S1 des surfaces des pics à $3590cm^{-1}$ et $3680cm^{-1}$ à la surface du pic à $3580cm^{-1}$ du spectre de spectroscopie RAMAN et la capacité massique R de la matière active correspondant aux échantillons a à h préparés précédemment. Lorsque l'hydroxyde possède des valeurs de ce rapport comprises entre 0,08 et 0,14, on obtient des performances satisfaisantes de la matière active.

De même la figure 9 montre la relation entre le rapport S2 de la surface du pic à $511cm^{-1}$ à la surface du pic à $460cm^{-1}$ du spectre RAMAN et la capacité massique R de la matière active correspondant aux échantillons a à h préparés précédemment. Pour des valeurs de ce rapport comprises entre 1,0 et 1,2, on observe des bonnes performances de la matière active.

EXEMPLE 9

On prépare un échantillon i d'hydroxyde à base de nickel selon la présente invention contenant 1% d'hydroxyde de cobalt et 4% d'hydroxyde de zinc syncristallisés, par un procédé de précipitation- analogue à celui décrit dans l'exemple 1. On procède à la caractérisation de l'échantillon i obtenu.

Le diagramme de diffraction X de l'échantillon i est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon i vaut 1,24. La longueur de cohérence est de 25,0nm. La taille des cristallites calculée à partir de la largeur à mi-hauteur de la raie [101] la plus intense est ici de 13,0nm. Le premier et le deuxième critères selon l'invention ne sont donc pas remplis.

A partir du spectre obtenu par spectroscopie RAMAN pour l'échantillon i, réalisé dans les mêmes conditions que celles données dans l'exemple 1, on mesure la surface des pics situés aux longueur d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon i la valeur de 0,130. Le calcul du rapport de la surface du pic à $511cm^{-1}$ à la surface du pic à $460cm^{-1}$ donne une valeur de 1,20. Le troisième et le quatrième critères selon l'invention sont donc remplis.

Un accumulateur Ni-Cd, analogue à celui décrit dans l'exemple 1 mais comportant une électrode contenant l'échantillon i, a été cyclé dans les mêmes conditions que celles données dans l'exemple 1. Après stabilisation, on

mesure la capacité déchargée qui est de 289mAh/g de matière active pour l'échantillon i, ce qui correspond à l'échange de 1,23 électron par mole de $Ni(OH)_2$.

Les résultats sont rassemblés dans le tableau II ci-dessous.

EXEMPLE 10

On prépare un échantillon d'hydroxyde à base de nickel selon la présente invention contenant 1% d'hydroxyde de cobalt et 4% d'hydroxyde de zinc syncristallisés, par un procédé de précipitation analogue à celui décrit dans l'exemple 2. On procède à la caractérisation de l'échantillon j obtenu.

Le diagramme de diffraction X de l'échantillon j est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon j vaut 1,63. La longueur de cohérence est de 27,5nm. La taille des cristallites calculée à partir de la largeur à mi-hauteur de la raie [101] la plus intense est ici de 16,0nm. Le premier et le deuxième critères selon l'invention ne sont donc pas remplis.

A partir du spectre obtenu par spectroscopie RAMAN pour l'échantillon j, réalisé dans les mêmes conditions que celles données dans l'exemple 1, on mesure la surface des pics situés aux longueur d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon j la valeur de 0,130. Le calcul du rapport de la surface du pic à $511cm^{-1}$ à la surface du pic à $460cm^{-1}$ donne une valeur de 1,09. Le troisième et le quatrième critères selon l'invention sont donc remplis.

Un accumulateur Ni-Cd, analogue à celui décrit dans l'exemple 1 mais comportant une électrode contenant l'échantillon j, a été cyclé dans les mêmes conditions que celles données dans l'exemple 1. Après stabilisation, on mesure la capacité déchargée qui est de 263mAh/g de matière active pour l'échantillon j, ce qui correspond à l'échange de 1,12 électron par mole de $Ni(OH)_2$.

Les résultats sont rassemblés dans le tableau II ci-dessous.

EXEMPLE 11

On prépare un échantillon k d'hydroxyde à base de nickel ne faisant pas partie de l'invention contenant 4% d'hydroxyde de cobalt et 6% d'hydroxyde de cadmium syncristallisés, par un procédé de précipitation analogue à celui décrit dans l'exemple 1 mais en utilisant une température de séchage supérieure à 120°C. On procède à la caractérisation de l'échantillon k obtenu.

Le diagramme de diffraction X de l'échantillon k est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon k vaut 1,22. Le premier critère selon l'invention n'est donc pas rempli.

La longueur de cohérence de l'échantillon k est de 17,0nm. Le deuxième critère selon l'invention n'est donc pas rempli.

La taille des cristallites de l'échantillon k calculée à partir de la largeur à mi-hauteur de la raie [101] la plus intense est ici de 6,9nm.

A partir du spectre obtenu par spectroscopie RAMAN pour l'échantillon k, réalisé dans les mêmes conditions que celles données dans l'exemple 1, on mesure la surface des pics situés aux longueur d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon k la valeur de 0,07. Le calcul du rapport de la surface du pic à $511cm^{-1}$ à la surface du pic à $460cm^{-1}$ donne une valeur de 1,90. Le troisième et le quatrième critères selon l'invention ne sont donc pas remplis.

Un accumulateur Ni-Cd, analogue à celui décrit dans l'exemple 1 mais comportant une électrode contenant l'échantillon k, a été cyclé dans les mêmes conditions que celles données dans l'exemple 1. Après stabilisation, on mesure la capacité déchargée qui est de 223mAh/g de matière active pour l'échantillon k, ce qui correspond à l'échange de 0,95 électron par mole de $Ni(OH)_2$.

Les résultats sont rassemblés dans le tableau II ci-dessous.

TABLEAU II

| REFERENCE | i | j | k |
|---|---|---|---|
| $M=\frac{I_{[103]}}{I_{[200]}}$ | 1,24 | 1,63 | 1,22 |
| $L= 3\sqrt{(\phi_{[100]})^2.\phi_{[001]}}$ (nm) | 25,0 | 27,5 | 17,0 |
| Taille de cristallite (nm) selon la raie [101] | 13,0 | 16,0 | 6,9 |
| $S_1 = \frac{S_{3600} + S_{3687}}{S_{3580}}$ | 0,13 | 0,13 | 0,07 |
| $S_2 = \frac{S_{511}}{S_{460}}$ | 1,20 | 1,09 | 1,90 |
| Nombre d'électrons échangés par mole de $Ni(OH)_2$ | 1,23 | 1,12 | 0,95 |
| Capacité (mAh/g) de la matière active positive | 289 | 263 | 223 |

EXEMPLE 12

On prépare un échantillon 1 d'hydroxyde à base de nickel selon la présente invention contenant 1% d'hydroxyde de cobalt et 4% d'hydroxyde de zinc syncristallisés, par un procédé de précipitation analogue à celui décrit dans l'exemple 2.

Le diagramme de diffraction X de l'échantillon 1 est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon 1 vaut 0,96 La longueur de cohérence est de 15,0nm. La taille des cristallites calculée à partir de la largeur à mi-hauteur de la raie [101] la plus intense est ici de 6,2nm. Le premier et le deuxième critères selon l'invention sont donc remplis.

A partir du spectre obtenu par spectroscopie RAMAN pour l'échantillon 1, réalisé dans les mêmes conditions que celles données dans l'exemple 1, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon 1 la valeur de 0,120. Le calcul du rapport de la surface du pic à $511cm^{-1}$ à la surface du pic à $460cm^{-1}$ donne une valeur de 1,10. Le troisième et le quatrième critères selon l'invention sont donc remplis.

Puis on mesure l'intensité des pics situés aux longueurs d'ondes $511cm^{-1}$ et $460cm^{-1}$. Le calcul du rapport de l'intensité du pic à $511cm^{-1}$ à l'intensité du pic à $460cm^{-1}$ donne une valeur de 1,1 telle que: 1,1 = (0,24 x 1) + 0,86. Ce résultat est représenté par le point 100 de la figure 10. Le critère permettant de s'assurer de la répartition homogène du cobalt dans l'hydroxyde de nickel est donc bien rempli car on a bien $y \geq 0,7$ pour l'échantillon 1.

Un accumulateur Ni-Cd, analogue à celui décrit dans l'exemple 1 mais comportant une électrode contenant l'échantillon 1 de matière active, a été cyclé dans les mêmes conditions que celles données dans l'exemple 1. Après stabilisation, on mesure la capacité déchargée qui est de 275mAh/g de matière active pour l'échantillon 1, ce qui correspond à l'échange de 1,14 électron par mole de $Ni(OH)_2$.

Ensuite, on mesure la capacité déchargée dans les conditions suivantes:

- charge à $0,05C_n$ pendant 4 heures, puis à $0,2C_n$ pendant 5 heures,
- décharge à $0,33C_n$ jusqu'à une tension d'arrêt de 1V.

Une première mesure est effectuée à température ambiante. On obtient la capacité déchargée qui est de 264mAh/g à température ambiante. Après avoir effectué cinq cycles dans les conditions précédentes à une température de 40°C, on réalise la même mesure de capacité que précédemment mais à 40°C et on obtient une capacité de 224mAh/g à cette température. Le rapport du rendement à 40°C à celui à température ambiante vaut 85% pour l'échantillon 1. Ce résultat montre une bonne chargeabilité à chaud de l'échantillon 1 selon l'invention contenant de l'hydroxyde de cobalt syncristallisé avec l'hydroxyde de nickel et réparti de manière homogène dans sa structure cristalline.

Une mesure de l'autodécharge de l'accumulateur Ni-Cd décrit ci-dessus contenant l'échantillon 1 a été effectuée dans les conditions suivantes:

- charge à température ambiante à $0,2C_n$ pendant 5 heures, puis à $0,05C_n$ pendant 4 heures,
- repos de 7 jours à une température de 40°C,
- décharge à $0,33C_n$ jusqu'à une tension d'arrêt de 1V.

La capacité déchargée qui est ainsi mesurée est comparée à celle mesurée dans des conditions analogues mais sans période de repos. Le calcul de l'autodécharge donne une valeur de 23%, ce qui montre une bonne conservation de la capacité de la part de l'échantillon 1 selon l'invention qui contient de l'hydroxyde de cobalt syncristallisé avec l'hydroxyde de nickel et réparti de manière homogène dans sa structure cristalline.
Les résultats sont rassemblés dans le tableau III ci-dessous.

EXEMPLE 13

On prépare un échantillon m d'hydroxyde à base de nickel selon la présente invention contenant 6% d'hydroxyde de cobalt et 4% d'hydroxyde de zinc syncristallisés, par un procédé de précipitation analogue à celui décrit dans l'exemple 2.
Le diagramme de diffraction X de l'échantillon m est réalisé dans les mêmes conditions que celles données dans l'exemple 1. A partir de ce diagramme, on mesure l'intensité relative de la raie [103] et de la raie [200] et on en calcule le rapport.
Le rapport de l'intensité de la raie [103] à la raie [200] pour l'échantillon m vaut 0,96 La longueur de cohérence est de 14,6nm. La taille des cristallites calculée à partir de la largeur à mi-hauteur de la raie [101] la plus intense est ici de 6,3nm. Le premier et le deuxième critères selon l'invention sont donc remplis.
A partir du spectre obtenu par spectroscopie RAMAN pour l'échantillon m réalisé dans les mêmes conditions que celles données dans l'exemple 1, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon m la valeur de 0,121. Le troisième critère selon l'invention est donc rempli.
Le calcul du rapport de la surface du pic à $511cm^{-1}$ à la surface du pic à $460cm^{-1}$ donne une valeur de 25,0. Le quatrième critère selon l'invention n'est donc pas rempli.
Puis on mesure l'intensité des pics situés aux longueurs d'ondes $511cm^{-1}$ et $460cm^{-1}$. Le calcul du rapport de l'intensité du pic à $511cm^{-1}$ à l'intensité du pic à $460cm^{-1}$ donne une valeur de 2,35 telle que: 2,35 = (0,24 x 6) + 0,91. Ce résultat est représenté par le point 101 de la figure 10. Le critère permettant de s'assurer de la répartition homogène du cobalt dans l'hydroxyde de nickel est donc bien rempli car on a bien $y \geq 0,7$ pour l'échantillon m.
Un accumulateur Ni-Cd, analogue à celui décrit dans l'exemple 1 mais comportant une électrode contenant l'échantillon m de matière active, a été cyclé dans les mêmes conditions que celles données dans l'exemple 1. Après stabilisation, on mesure la capacité déchargée qui est de 277mAh/g de matière active pour l'échantillon m, ce qui correspond à l'échange de 1,21 électron par mole de $Ni(OH)_2$.
Ensuite, on mesure la capacité déchargée dans les conditions suivantes:

- charge à $0,05C_n$ pendant 4 heures, puis à $0,2C_n$ pendant 5 heures,
- décharge à $0,33C_n$ jusqu'à une tension d'arrêt de 1V.

Une première mesure est effectuée à température ambiante. On obtient la capacité déchargée qui est de 268mAh/g à température ambiante. Après avoir effectué cinq cycles dans les conditions précédentes à une température de 40°C, on réalise la même mesure de capacité que précédemment mais à 40°C et on obtient une capacité de 252mAh/g à cette température. Le rapport du rendement à 40°C à celui à température ambiante vaut 94% pour l'échantillon m. Ce résultat montre une excellente chargeabilité à chaud de l'échantillon m selon l'invention contenant de l'hydroxyde de cobalt syncristallisé avec l'hydroxyde de nickel et réparti de manière homogène dans sa structure cristalline.
Une mesure de l'autodécharge de l'accumulateur Ni-Cd décrit ci-dessus contenant l'échantillon m a été effectuée dans les conditions suivantes:

- charge à température ambiante à $0,2C_n$ pendant 5 heures, puis à $0,05C_n$ pendant 4 heures,
- repos de 7 jours à une température de 40°C,
- décharge à $0,33C_n$ jusqu'à une tension d'arrêt de 1V.

La capacité déchargée qui est ainsi mesurée est comparée à celle mesurée dans des conditions analogues

mais sans période de repos. Le calcul de l'autodécharge donne une valeur de 18%, ce qui montre une très bonne conservation de la capacité de la part de l'échantillon m selon l'invention qui contient de l'hydroxyde de cobalt syncristallisé avec l'hydroxyde de nickel et réparti de manière homogène dans sa structure cristalline.

Les résultats sont rassemblés dans le tableau III ci-dessous.

EXEMPLE 14

On prépare un échantillon n d'hydroxyde à base de nickel selon la présente invention contenant 3% d'hydroxyde de cobalt et 4% d'hydroxyde de zinc syncristallisés, par un procédé de précipitation analogue à celui décrit dans l'exemple 2.

Le diagramme de diffraction X de l'échantillon n est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon n vaut 0,98 La longueur de cohérence est de 12,0nm. La taille des cristallites calculée à partir de la largeur à mi-hauteur de la raie [101] la plus intense est ici de 6,7nm. Le premier et le deuxième critères selon l'invention sont donc remplis.

A partir du spectre obtenu par spectroscopie RAMAN pour l'échantillon n, réalisé dans les mêmes conditions que celles données dans l'exemple 1, on mesure la surface des pics situés aux longueurs d'ondes 3687cm$^{-1}$, 3600cm$^{-1}$, 3580cm$^{-1}$, 511cm$^{-1}$ et 460cm$^{-1}$. On calcule alors le rapport de la somme des surfaces des pics à 3687cm-$^{1}$ et 3600cm$^{-1}$ à la surface du pic à 3580cm$^{-1}$, et on obtient pour l'échantillon n la valeur de 0,120. Le troisième critère selon l'invention est donc rempli.

Le calcul du rapport de la surface du pic à 511cm$^{-1}$ à la surface du pic à 460cm$^{-1}$ donne une valeur de 1,80. Le quatrième critère selon l'invention n'est donc pas rempli.

Puis on mesure l'intensité des pics situés aux longueurs d'ondes 511cm$^{-1}$ et 460cm$^{-1}$. Le calcul du rapport de l'intensité du pic à 511cm$^{-1}$ à l'intensité du pic à 460cm$^{-1}$ donne une valeur de 1,6 telle que: 1,6 = (0,24 x 3) + 0,88. Ce résultat est représenté par le point 102 de la figure 10. Le critère permettant de s'assurer de la répartition homogène du cobalt dans l'hydroxyde de nickel est donc bien rempli car on a bien $y \geq 0,7$ pour l'échantillon n.

Un accumulateur Ni-Cd, analogue à celui décrit dans l'exemple 1 mais comportant une électrode contenant l'échantillon n de matière active, a été cyclé dans les mêmes conditions que celles données dans l'exemple 1. Après stabilisation, on mesure la capacité déchargée qui est de 279mAh/g de matière active pour l'échantillon n, ce qui correspond à l'échange de 1,19 électron par mole de $Ni(OH)_2$.

Ensuite, on mesure la capacité déchargée dans les conditions suivantes:

- charge à $0,05C_n$ pendant 4 heures, puis à $0,2C_n$ pendant 5 heures,
- décharge à $0,33C_n$ jusqu'à une tension d'arrêt de 1V.

Une première mesure est effectuée à température ambiante. On obtient la capacité déchargée qui est de 262mAh/g à température ambiante. Après avoir effectué cinq cycles dans les conditions précédentes à une température de 40°C, on réalise la même mesure de capacité que précédemment mais à 40°C et on obtient une capacité de 241mAh/g à cette température. Le rapport du rendement à 40°C à celui à température ambiante vaut 92% pour l'échantillon n, ce qui montre une excellente chargeabilité à chaud de l'échantillon n selon l'invention contenant de l'hydroxyde de cobalt syncristallisé avec l'hydroxyde de nickel et réparti de manière homogène dans sa structure cristalline.

Une mesure de l'autodécharge de l'accumulateur Ni-Cd décrit ci-dessus contenant l'échantillon n a été effectuée dans les conditions suivantes:

- charge à température ambiante à $0,2C_n$ pendant 5 heures, puis à $0,05C_n$ pendant 4 heures,
- repos de 7 jours à une température de 40°C,
- décharge à $0,33C_n$ jusqu'à une tension d'arrêt de 1V.

La capacité déchargée qui est ainsi mesurée est comparée à celle mesurée dans des conditions analogues mais sans période de repos. Le calcul de l'autodécharge donne une valeur de 20%, ce qui montre une bonne conservation de la capacité de la part de l'échantillon n selon l'invention qui contient de l'hydroxyde de cobalt syncristallisé avec l'hydroxyde de nickel et réparti de manière homogène dans sa structure cristalline.

Les résultats sont rassemblés dans le tableau III ci-dessous.

EXEMPLE 15

On prépare un échantillon p d'hydroxyde à base de nickel selon la présente invention contenant 3% d'hydroxyde de cobalt et 4% d'hydroxyde de zinc syncristallisés, par un procédé de précipitation analogue à celui décrit dans l'exemple 2 mais en modifiant l'ordre d'introduction des réactifs. Dans un réacteur, analogue à celui utilisé dans l'exemple 1, agité à une vitesse de 100 tours/mn et maintenu à une température constante de 60°C, on introduit environ 2000g d'une solution de soude caustique à une concentration de 4M. On y ajoute, selon un débit constant et continu pendant 5 minutes, une solution aqueuse à une concentration de 1M de nitrates de nickel, de cobalt et de cadmium dans les proportions requises pour obtenir l'hydroxyde voulu. Lorsque l'ajout de la solution de nitrates est terminé, la solution est maintenue sous agitation et chauffage constants pendant 2 heures afin de réaliser un mûrissement des particules d'hydroxyde. Le précipité est alors filtré, séché, lavé, broyé et tamisé de la manière décrite dans l'exemple 1.

Le diagramme de diffraction X de l'échantillon p est réalisé dans les mêmes conditions que celles données dans l'exemple 1. A partir de ce diagramme, on mesure l'intensité relative de la raie [103] et de la raie [200] et on en calcule le rapport.

Le rapport de l'intensité de la raie [103] à la raie [200] pour l'échantillon p vaut 0,96. La longueur de cohérence est de 11,8nm. La taille des cristallites calculée à partir de la largeur à mi-hauteur de la raie [101] la plus intense est ici de 5,5nm. Le premier et le deuxième critères selon l'invention sont donc remplis.

A partir du spectre obtenu par spectroscopie RAMAN pour l'échantillon p, réalisé dans les mêmes conditions que celles données dans l'exemple 1, on mesure la surface des pics situés aux longueurs d'ondes $3687cm^{-1}$, $3600cm^{-1}$, $3580cm^{-1}$, $511cm^{-1}$ et $460cm^{-1}$. On calcule alors le rapport de la somme des surfaces des pics à $3687cm^{-1}$ et $3600cm^{-1}$ à la surface du pic à $3580cm^{-1}$, et on obtient pour l'échantillon p la valeur de 0,110. Le calcul du rapport de la surface du pic à $511cm^{-1}$ à la surface du pic à $460cm^{-1}$ donne une valeur de 0,81. Le troisième et le quatrième critères selon l'invention sont donc remplis.

Puis on mesure l'intensité des pics situés aux longueurs d'ondes $511cm^{-1}$et $460cm^{-1}$. Le calcul du rapport de l'intensité du pic à $511cm^{-1}$ à l'intensité du pic à $460cm^{-1}$ donne une valeur de 0,80 telle que: 0,80 = (0,24 x 3) + 0,08. Ce résultat est représenté par le point 103 de la figure 10. Le critère permettant de s'assurer de la répartition homogène du cobalt dans l'hydroxyde de nickel n'est donc pas rempli car on a y < 0,7.

Un accumulateur Ni-Cd, analogue à celui décrit dans l'exemple 1 mais comportant une électrode contenant l'échantillon p de matière active, a été cyclé dans les mêmes conditions que celles données dans l'exemple 1. Après stabilisation, on mesure la capacité déchargée qui est de 282mAh/g de matière active pour l'échantillon p, ce qui correspond à l'échange de 1,20 électron par mole de $Ni(OH)_2$.

Ensuite, on mesure la capacité déchargée dans les mêmes conditions que celles données dans l'exemple 12. Une première mesure est effectuée à température ambiante. On obtient la capacité déchargée qui est de 265mAh/g à température ambiante. Après avoir effectué cinq cycles dans les conditions données dans l'exemple 12 à une température de 40°C, on réalise la même mesure de capacité que précédemment mais à 40°C et on obtient une capacité de 162mAh/g à cette température. Le rapport du rendement à 40°C à celui à température ambiante vaut 61% pour l'échantillon p. Ce résultat montre une faible chargeabilité à chaud de l'échantillon p selon l'invention contenant de l'hydroxyde de cobalt syncristallisé avec l'hydroxyde de nickel et réparti de manière inhomogène dans sa structure cristalline.

Une mesure de l'autodécharge de l'accumulateur Ni-Cd décrit ci-dessus contenant l'échantillon 1 a été effectuée dans les conditions décrites dans l'exemple 12. On compare les capacités déchargées dans des conditions analogues, avec et sans période de repos. Le calcul de l'autodécharge donne une valeur de 30%, ce qui montre une mauvaise conservation de la capacité de la part de l'échantillon p selon l'invention qui contient de l'hydroxyde de cobalt syncristallisé avec l'hydroxyde de nickel et réparti de manière inhomogène dans sa structure cristalline.

Les résultats sont rassemblés dans le tableau III ci-dessous.

TABLEAU III

| REFERENCE | l | m | n | p |
|---|---|---|---|---|
| $M=\frac{I_{[103]}}{I_{[200]}}$ | 0,96 | 0,96 | 0,98 | 0,96 |
| $L= 3\sqrt{(\phi_{[100]})^2.\phi_{[001]}}$ (nm) | 15,0 | 14,6 | 12,0 | 11,8 |
| Taille de cristallite (nm) selon la raie [101] | 6,2 | 6,3 | 6,7 | 5,5 |
| $S_1 = \frac{S_{3600} + S_{3687}}{S_{3580}}$ | 0,12 | 0,121 | 0,12 | 0,11 |

TABLEAU III (suite)

| REFERENCE | l | m | n | p |
|---|---|---|---|---|
| $S_2 = \frac{S_{511}}{S_{460}}$ | 1,10 | 2,5 | 1,15 | 0,81 |
| Nombre d'électrons échangés par mole de $Ni(OH)_2$ | 1,14 | 1,21 | 1,19 | 1,20 |
| Capacité (mAh/g) de la matière active positive | 275 | 277 | 279 | 282 |
| $y = \frac{I_{511}}{I_{460}} - (x.P)$ | 0,86 | 0,91 | 0,88 | 0,08 |
| Chargeabilité à chaud (%) | 85 | 94 | 92 | 61 |
| Autodécharge (%) | 23 | 18 | 20 | 30 |

Bien entendu la présente invention est susceptible de nombreuses variantes accessibles à l'homme de l'art. En particulier on pourra sans sortir du cadre de l'invention utiliser tous les types de support conducteur tridimensionnel de grande porosité pour réaliser l'électrode qui pourra être incorporée dans un accumulateur à électrode positive au nickel et électrolyte alcalin aqueux quelle que soit leur forme, comme par exemple ceux basés sur les couples Ni-Cd, Ni-$H_2$, Ni-MH, Ni-Fe, Ni-Zn, etc...

## Revendications

1. Electrode au nickel à support non fritté pour accumulateur à électrolyte alcalin comprenant une structure conductrice tridimensionnelle poreuse et une matière électrochimiquement active contenant des particules d'un hydroxyde à base de nickel de structure cristallographique β, caractérisée par le fait que ledit hydroxyde répond au critère suivant : un rapport de la somme des surfaces des pics à 3687±10$cm^{-1}$ et 3600±10$cm^{-1}$ à la surface du pic à 3580±10$cm^{-1}$ du spectre de spectroscopie RAMAN dudit hydroxyde qui vaut 0,11±0,03.

2. Electrode selon la revendication 1, dans laquelle ledit hydroxyde répond en outre au critère suivant : un rapport de la surface du pic à 511±10$cm^{-1}$ à la surface du pic à 460± 10$cm^{-1}$ du spectre de spectroscopie RAMAN dudit hydroxyde qui est de 1,1±0,1.

3. Electrode selon l'une des revendications 1 et 2, dans laquelle ledit hydroxyde répond en outre au critère suivant : une longueur de cohérence L qui est de 13±3nm, ladite longueur de cohérence L répondant à la formule:

$$L = 3\sqrt{(\phi[100])^2 x\ (\phi[001])}$$

4. Electrode selon l'une des revendications précédentes, dans laquelle ledit hydroxyde répond en outre au critère suivant : un rapport de l'intensité de la raie [103] à la raie [200] du diagramme de diffraction des rayons X dudit hydroxyde qui vaut 1,05±0,10,

5. Electrode selon l'une des revendications précédentes, dans laquelle ledit hydroxyde à base de nickel contient au moins un hydroxyde syncristallisé d'un métal choisi parmi le cobalt, le cadmium, le zinc, le calcium et le magnésium.

6. Electrode selon l'une des revendications précédentes, dans laquelle ledit hydroxyde étant composé majoritairement d'un hydroxyde de nickel et contenant au moins une proportion massique P d'un hydroxyde de cobalt syncristallisé en % dudit hydroxyde, ledit hydroxyde répond en outre au critère suivant: un rapport Q de l'intensité du pic à 511±10$cm^{-1}$ à l'intensité du pic à 460±10$cm^{-1}$ du spectre de spectroscopie RAMAN dudit hydroxyde qui est tel que:

$$Q = xP + y \qquad \text{où } x = 0,24 \pm 0,02 \text{ et } y \geq 0,7.$$

7. Accumulateur contenant l'électrode selon l'une des revendications précédentes.

**8.** Batterie d'accumulateurs selon la revendication 7.

## Claims

**1.** A nickel electrode with a non-sintered support for a storage cell containing an alkaline electrolyte, the electrode comprising a porous three-dimensional conductive structure and an electrochemically active material containing particles of a nickel-based hydroxide with a β crystallographic structure, characterized in that said hydroxide satisfies the following criterion: the ratio of the sum of the surface areas of the peaks at 3687 ± 10 $cm^{-1}$ and 3600 ± 10 $cm^{-1}$ to the surface area of the peak at 3580 ± 10 $cm^{-1}$ in the Raman spectrum of said hydroxide is 0.11 ± 0.03.

**2.** An electrode according to claim 1, in which said hydroxide also satisfies the following criterion: the ratio of the surface area of the peak at 511 ± 10 $cm^{-1}$ to the surface area of the peak at 460 ± 10 $cm^{-1}$ in the Raman spectrum of said hydroxide is 1.1 ± 0.1.

**3.** An electrode according to claim 1 or 2, in which said hydroxide also satisfies the following criterion: the coherence length L is 13 ± 3 nm, said coherence length L having the formula:

$$L = \sqrt[3]{(\Phi_{[100]})^2 \times (\Phi_{[001]})}$$

**4.** An electrode according to any preceding claim, in which said hydroxide also satisfies the following criterion: the intensity ratio of the [103] line to the [200] line in the X-ray diffraction diagram of the hydroxide is 1.05 ± 0.10.

**5.** An electrode according to any preceding claim, in which said nickel-based hydroxide contains at least one syncrystallized hydroxide of a metal selected from cobalt, cadmium, zinc, calcium, and magnesium.

**6.** An electrode according to any one of the preceding claims, in which said hydroxide is mainly composed of a nickel hydroxide and contains at least a proportion by weight P, as a % of said hydroxide, of a syncrystallized cobalt hydroxide, said hydroxide further satisfying the following criterion: the ratio Q of the intensity of the peak at 511 ± 10 $cm^{-1}$ to the intensity of the peak at 460 ± 10 $cm^{-1}$ in the Raman spectrum of said hydroxide which is such that:

$$Q = xP + y \qquad \text{where } x = 0.24 \pm 0.02 \text{ and } y \geq 0.7.$$

**7.** A storage cell containing the electrode according to any preceding claim.

**8.** A battery of storage cells according to claim 7.

## Patentansprüche

**1.** Nickelelektrode mit nicht gesintertem Träger für einen Akkumulator mit alkalischem Elektrolyten, aufweisend eine poröse dreidimensionale leitfähige Struktur und ein elektrochemisch aktives Material, das Partikel eines Hydroxids auf Nickelgrundlage mit kristallographischer β-Struktur enthält, dadurch gekennzeichnet, daß das Hydroxid dem folgenden Kriterium entspricht: ein Verhältnis der Summe der Oberflächen der Peaks bei 3687 ± 10 $cm^{-1}$ und 3600 ± 10 $cm^{-1}$ zur Oberfläche des Peaks bei 3580 ± 10 $cm^{-1}$ des Ramanspektrums des Hydroxids beträgt 0,11 ± 0,03.

**2.** Elektrode nach Anspruch 1, bei der das Hydroxid ferner dem folgenden Kriterium entspricht: ein Verhältnis der Oberfläche des Peaks bei 511 ± 10 $cm^{-1}$ zur Oberfläche des Peaks bei 460 ± 10 $cm^{-1}$ des Ramanspektrums des Hydroxids beträgt 1,1 ± 0,1.

**3.** Elektrode nach Anspruch 1 oder 2, bei der das Hydroxid ferner dem folgenden Kriterium entspricht: eine Kohärenzlänge L von 13 ± 3 nm, wobei die Kohärenzlänge L der Formel

$$L = 3 \sqrt{(\phi[100])^2 \text{ x } (\phi[001])}$$

entspricht.

**4.** Elektrode nach einem der vorhergehenden Ansprüche, bei der das Hydroxid ferner dem folgenden Kriterium entspricht: ein Verhältnis der Intensität der [103]-Linie zur [200]-Linie des Röntgenbeugungsdiagramms des Hydroxids beträgt 1,05 ± 0,10.

**5.** Elektrode nach einem der vorhergehenden Ansprüche, bei der das Hydroxid auf Nickelgrundlage wenigstens ein synkristallisiertes Hydroxid eines Metalls enthält, das unter Kobalt, Cadmium, Zink, Calcium und Magnesium ausgewählt ist.

**6.** Elektrode nach einem der vorhergehenden Ansprüche, bei der das Hydroxid mehrheitlich aus einem Nickelhydroxid zusammengesetzt ist und wenigstens einen Massenanteil in Prozent P eines synkristallisierten Kobalthydroxids enthält, wobei das Hydroxid ferner dem folgenden Kriterium entspricht: ein Verhältnis Q der Intensität des Peaks bei 511 ± 10 $cm^{-1}$ zur Intensität des Peaks bei 460 ± 10 $cm^{-1}$ des Ramanspektrums des Hydroxids ist derart, daß

$$Q = xP + y,$$

wobei x = 0,24 ± 0,02 und y > = 0,7 ist.

**7.** Akkumulator, der die Elektrode nach einem der vorhergehenden Ansprüche enthält.

**8.** Batterie von Akkumulatoren nach Anspruch 7.

FIG.1

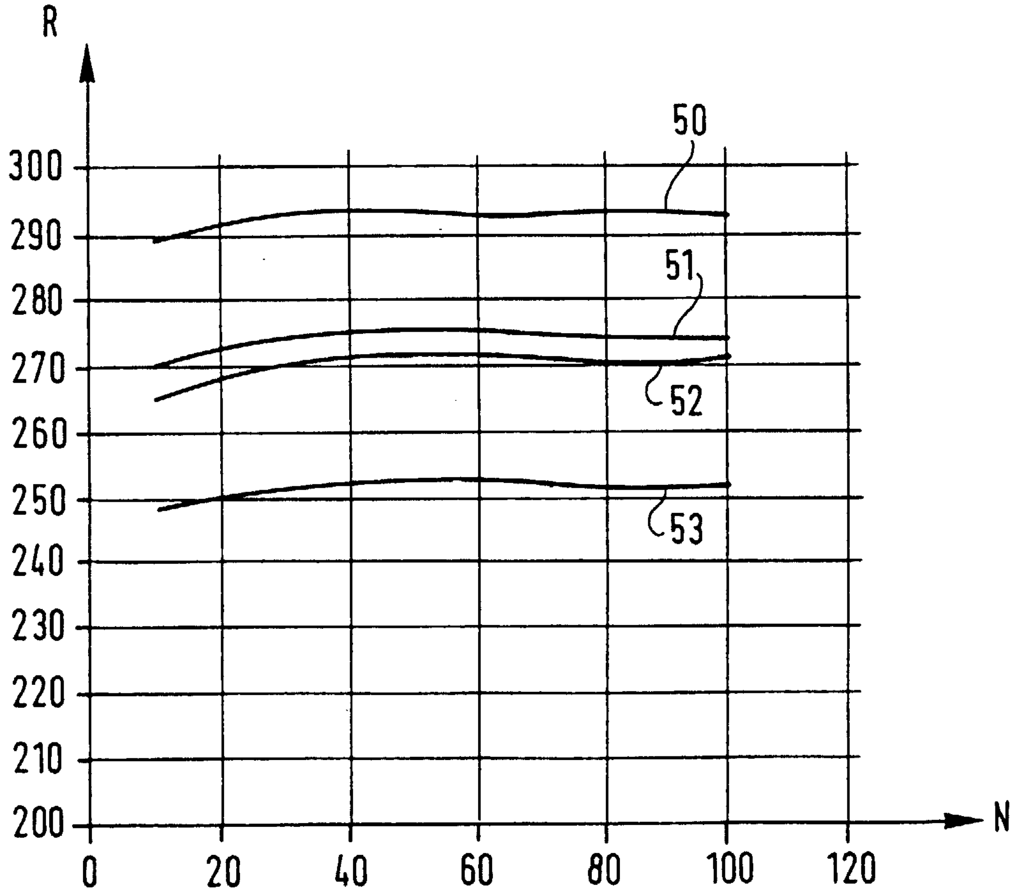
R
300
290
280
270
260
250
240
230
220
210
200
0
20
40
60
80
100
120
N
50
51
52
53

FIG.2

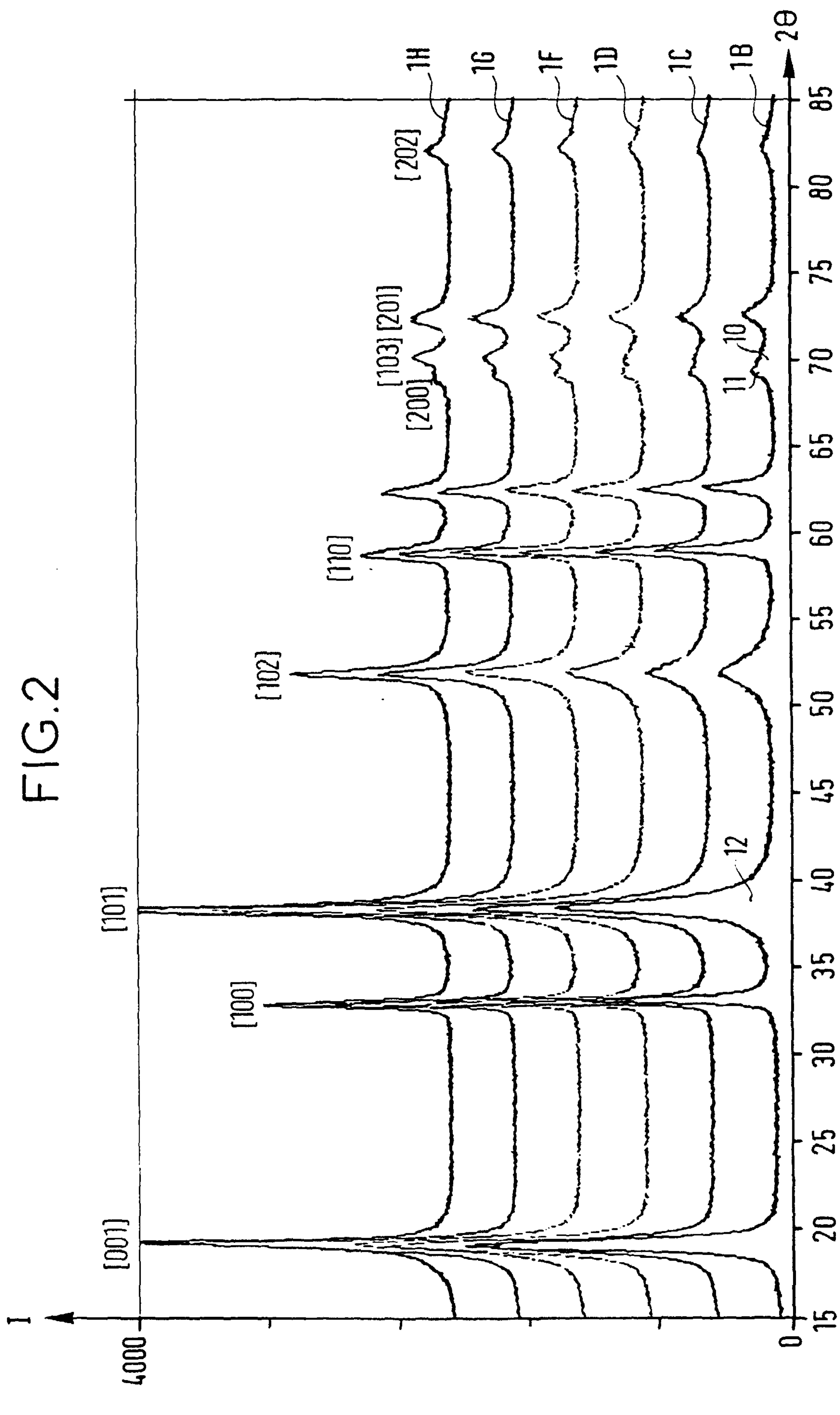
I
4000
0
2Θ
15
20
25
30
35
40
45
50
55
60
65
70
75
80
85
[001]
[100]
[101]
[102]
[110]
[200]
[103]
[201]
[202]
1H
1G
1F
1D
1C
1B
10
11
12

FIG.3

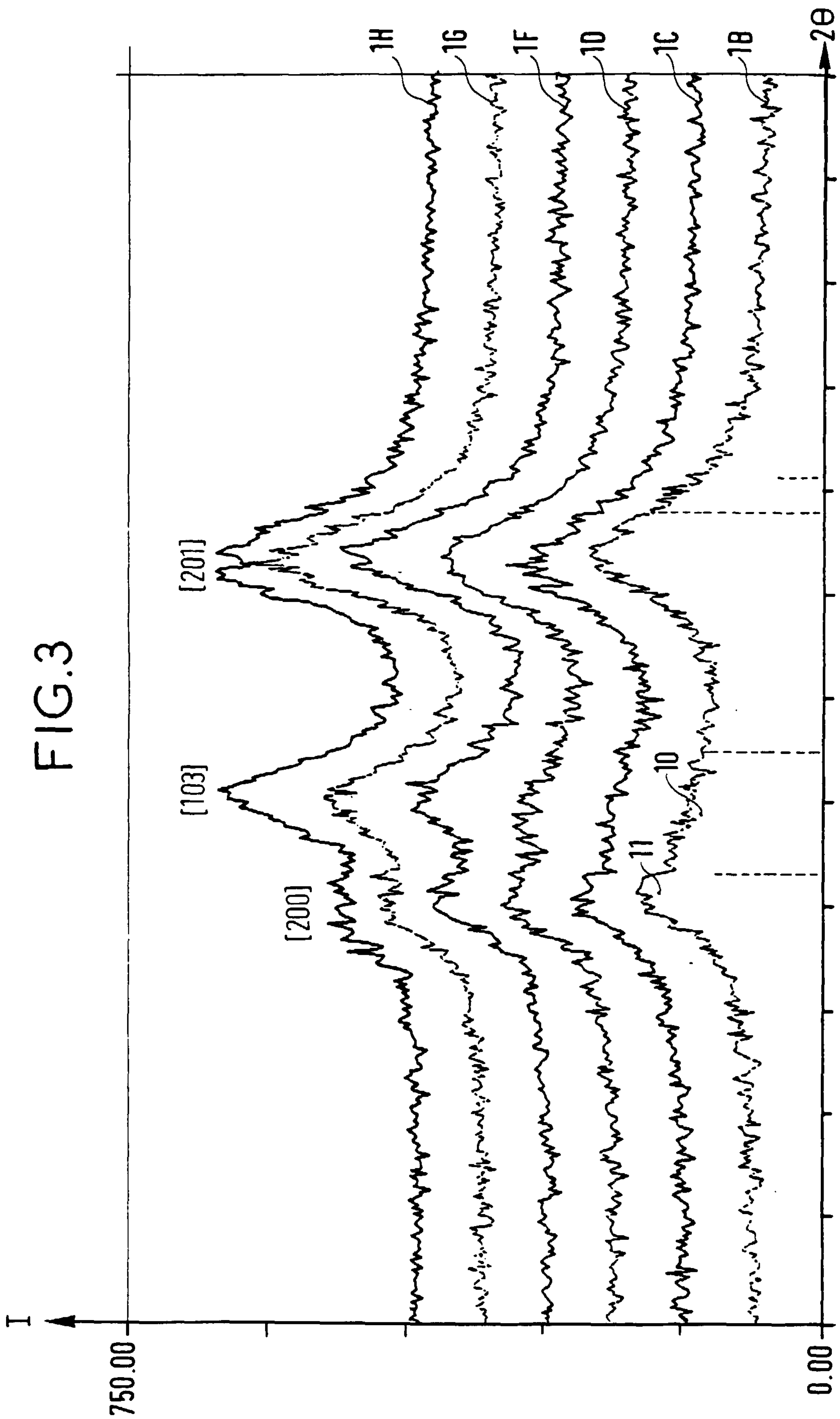

I
750.00
0.00
2θ
65
66
67
68
69
70
71
72
73
74
75
76
77
[200]
[103]
[201]
1H
1G
1F
1D
1C
1B
10
11

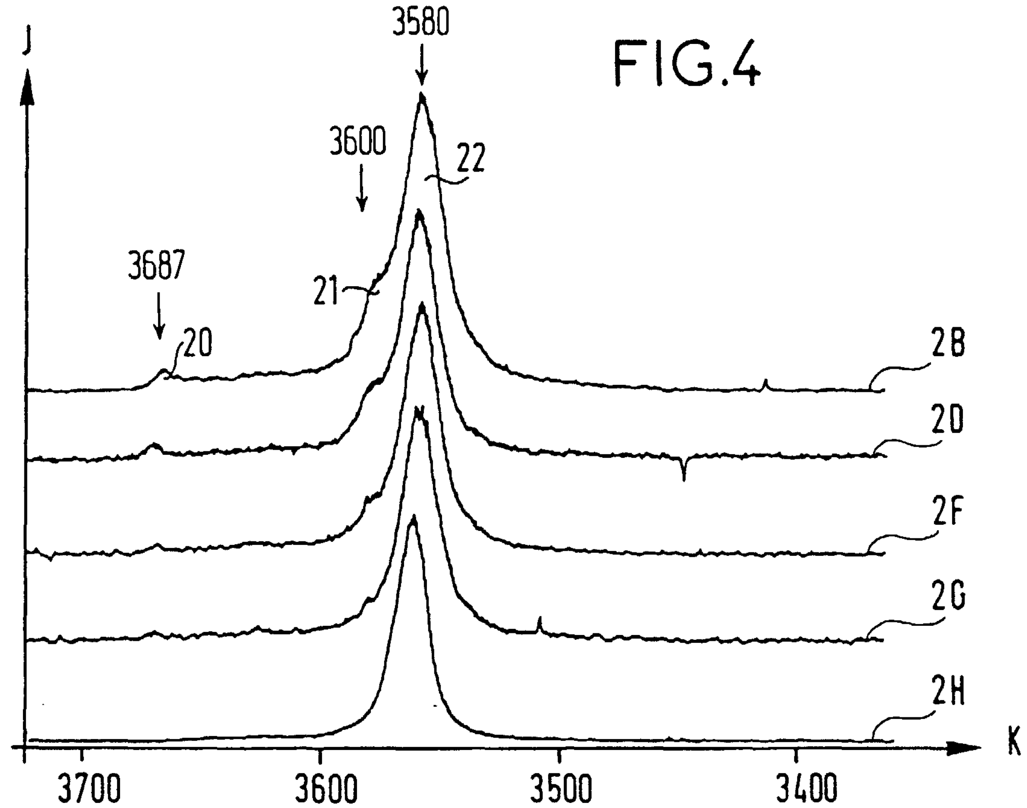
3580
3600
3687
20
21
22
2B
2D
2F
2G
2H
J
K
3700
3600
3500
3400

FIG.4

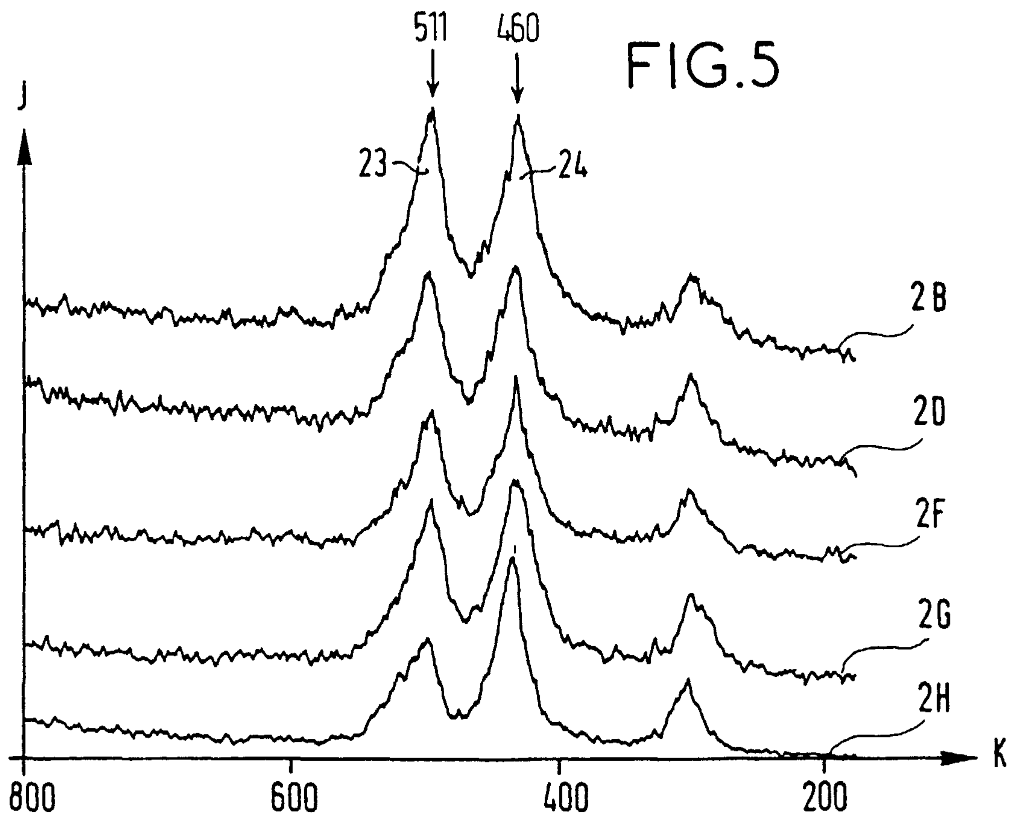
511
460
23
24
2B
2D
2F
2G
2H
J
K
800
600
400
200

FIG.5

FIG.6

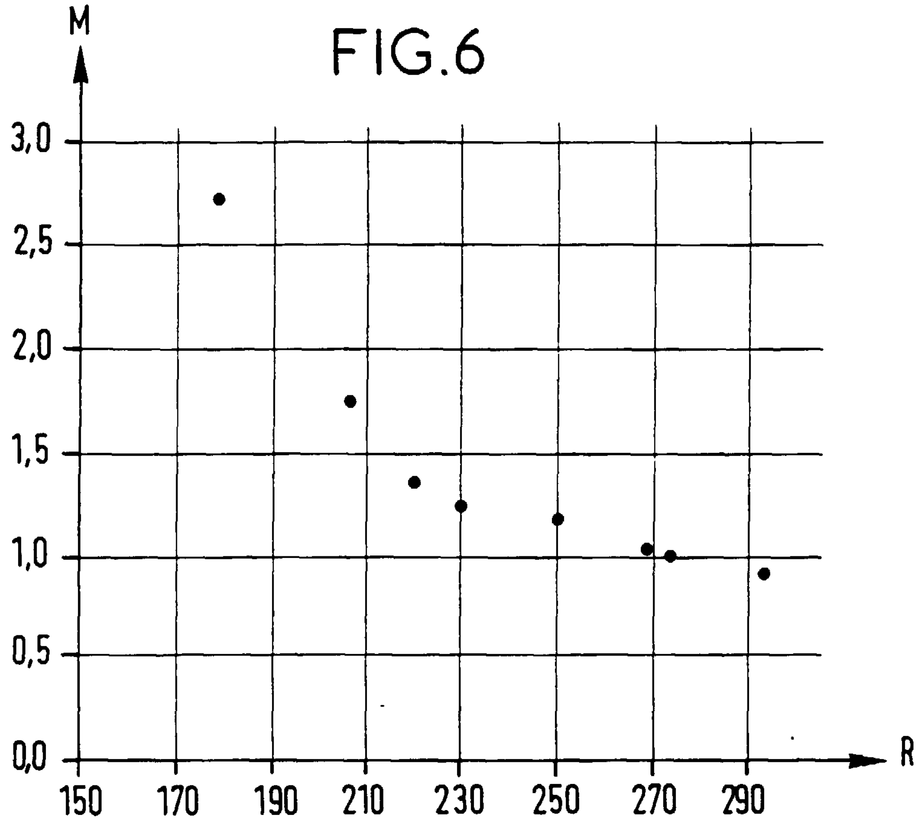
M
3,0
2,5
2,0
1,5
1,0
0,5
0,0
150
170
190
210
230
250
270
290
R

FIG.7

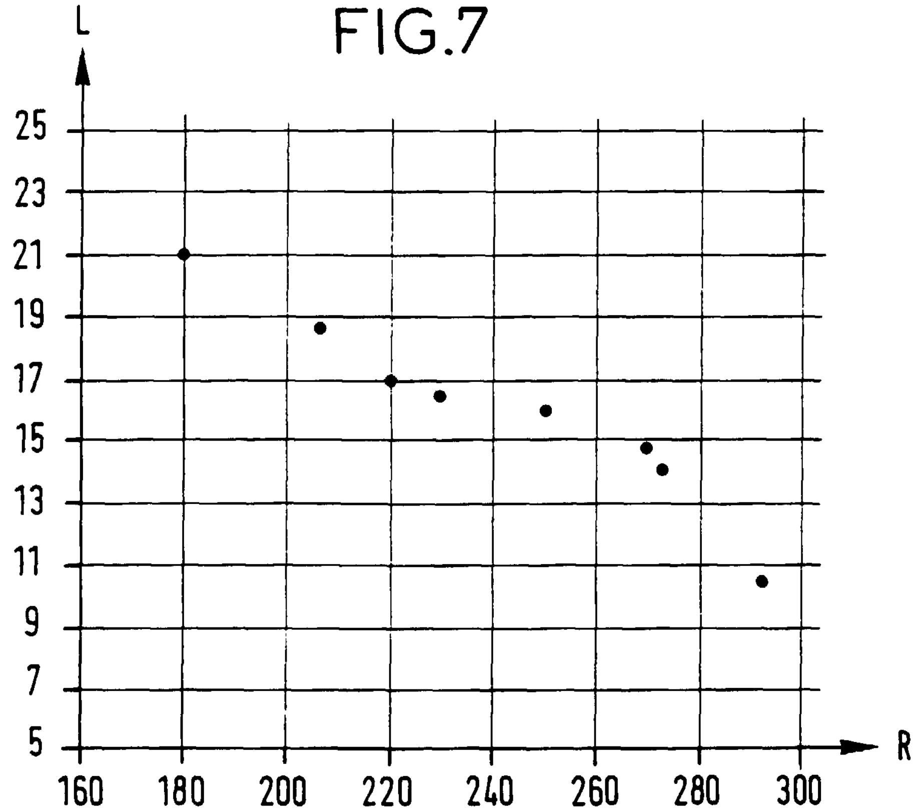
L
25
23
21
19
17
15
13
11
9
7
5
160
180
200
220
240
260
280
300
R

FIG.8

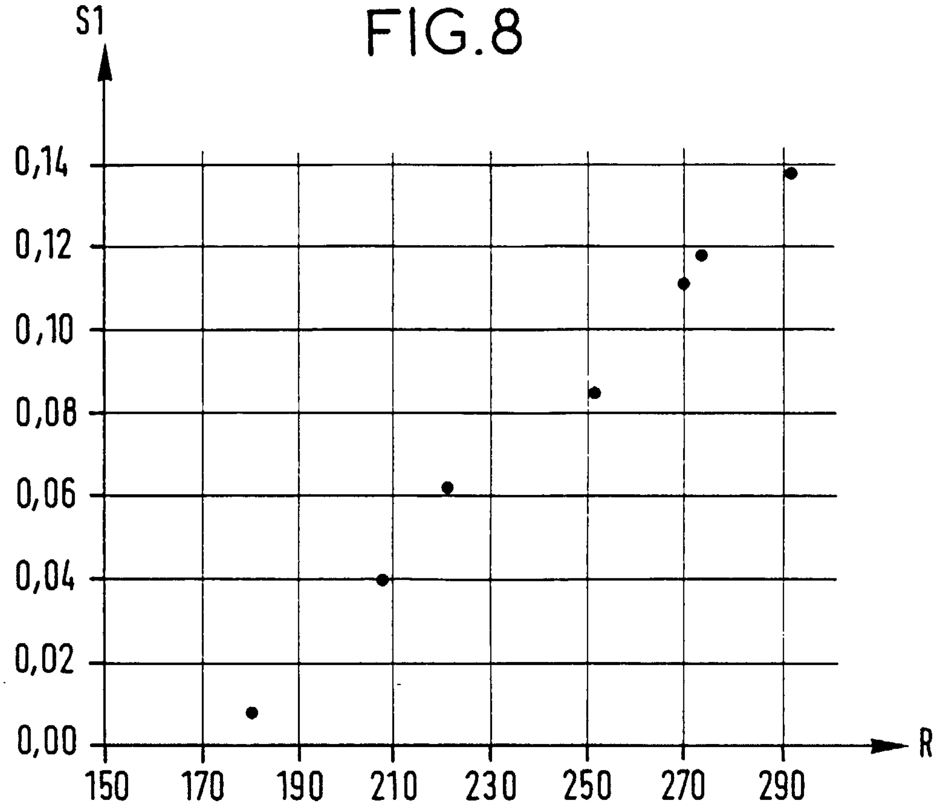
S1
0,14
0,12
0,10
0,08
0,06
0,04
0,02
0,00
150
170
190
210
230
250
270
290
R

FIG.9

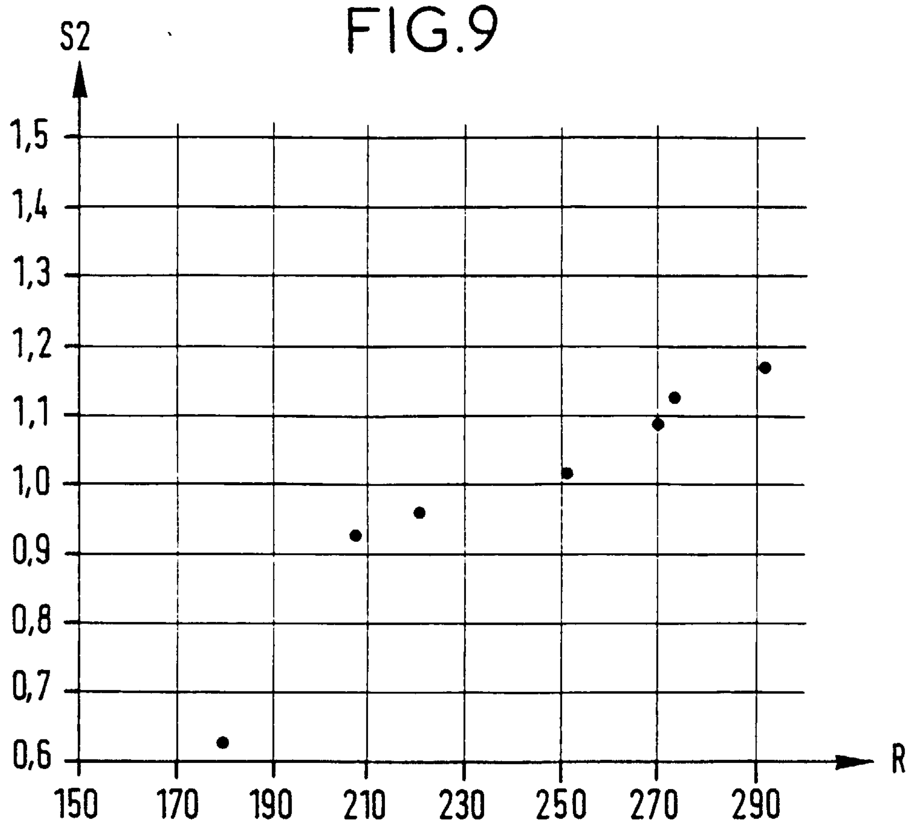
S2
1,5
1,4
1,3
1,2
1,1
1,0
0,9
0,8
0,7
0,6
150
170
190
210
230
250
270
290
R

FIG. 10